# EUROPEAN PATENT SPECIFICATION

(11) **EP 2 627 043 B1**
(45) Date of publication and mention of the grant of the patent: **15.11.2017**
(21) Application number: 11783089.3
(22) Date of filing: 03.06.2011
(51) Int. Cl.: H04J 3/16, H04L 12/913

(54) **METHOD, DEVICE AND SYSTEM FOR LOSSLESS BANDWIDTH ADJUSTMENT**
VERFAHREN, VORRICHTUNG UND SYSTEM ZUR VERLUSTLOSEN BANDBREITENEINSTELLUNG
PROCÉDÉ, DISPOSITIF ET SYSTÈME D'AJUSTEMENT DE BANDE PASSANTE SANS PERTE

(30) Priority: 08.11.2010 CN 201010539581
(43) Date of publication of application: 14.08.2013
(73) Proprietor: Huawei Technologies Co., Ltd., Longgang District Shenzhen, Guangdong 518129 (CN)
(72) Inventor: LIN, Yi, Guangdong 518129 (CN)
(74) Representative: Körber, Martin Hans
(86) International application number: PCT/CN2011/075321
(87) International publication number: WO 2011/144172

(56) References cited:
- CN-A- 101 388 838
- CN-A- 101 729 370
- CECCARELLI D CAVIGLIA ERICSSON S BELOTTI P GRANDI ALCATEL-LUCENT F ZHANG D LI HUAWEI TECHNOLOGIES J DRAKE JUNIPER D: "Technology Agnostic OSPF Traffic Engineering Extensions for Generalized MPLS (GMPLS); draft-bccdg-ccamp-gmpls-ospf-agnostic-00.t xt", TECHNOLOGY AGNOSTIC OSPF TRAFFIC ENGINEERING EXTENSIONS FOR GENERALIZED MPLS (GMPLS); DRAFT-BCCDG-CCAMP-GMPLS-OSPF-AGNOSTIC-00.T XT, INTERNET ENGINEERING TASK FORCE, IETF; STANDARDWORKINGDRAFT, INTERNET SOCIETY (ISOC) 4, RUE DES FALAISES CH- 1205 GENE, 15 October 2010 (2010-10-15), pages 1-19, XP015071689, [retrieved on 2010-10-15]
- CHAO FANG ET AL: "A Novel Scheme for Realization of Flexible ODU Hitless Resizing", PHOTONICS AND OPTOELECTRONIC (SOPO), 2010 SYMPOSIUM ON, IEEE, PISCATAWAY, NJ, USA, 19 June 2010 (2010-06-19), pages 1-4, XP031704652, ISBN: 978-1-4244-4963-7
- FATAI ZHANG HUAWEI GUOYING ZHANG CATR SERGIO BELOTTI ALCATEL-LUCENT D CECCARELLI ERICSSON: "Generalized Multi-Protocol Label Switching (GMPLS) Signaling Extensions for the evolving G.709 Optical Transport Networks Control; draft-zhang-ccamp-gmpls-evolving-g709-05.t xt", GENERALIZED MULTI-PROTOCOL LABEL SWITCHING (GMPLS) SIGNALING EXTENSIONS FOR THE EVOLVING G.709 OPTICAL TRANSPORT NETWORKS CONTROL; DRAFT-ZHANG-CCAMP-GMPLS-EVOLVING-G709-05.T XT, INTERNET ENGINEERING TASK FORCE, IETF; STANDARDWORKINGDRAFT, INTERNET SOC, no. 5, 9 July 2010 (2010-07-09), pages 1-22, XP015069879, [retrieved on 2010-07-09]
- FU M BETTS ZTE CORPORATION R JING X HUO CHINA TELECOM H LI CHINA MOBILE G WANG CHINA UNICOM G ZHANG CATR X: "Requirement for Multi Stages Multiplexing Configuration in G.709 Optical Transport Network; draft-fuxh-ccamp-multi-stage-multiplex-con fig-req-01.txt", REQUIREMENT FOR MULTI STAGES MULTIPLEXING CONFIGURATION IN G.709 OPTICAL TRANSPORT NETWORK; DRAFT-FUXH-CCAMP-MULTI-STAGE-MULTIPLEX-CON FIG-REQ-01.TXT, INTERNET ENGINEERING TASK FORCE, IETF; STANDARDWORKINGDRAFT, INTERNET SOCIETY (ISOC) 4, RUE DES FALA, no. 1, 12 July 2010 (2010-07-12), pages 1-14, XP015069962, [retrieved on 2010-07-12]
- MAARTEN VISSERS HUAWEI TECHNOLOGIES CO ET AL: "ODUflex hitless resizing method;C 572", ITU-T DRAFT ; STUDY PERIOD 2009-2012, INTERNATIONAL TELECOMMUNICATION UNION, GENEVA ; CH, vol. 9, 11/15, 18 September 2009 (2009-09-18), pages 1-20, XP017447269, [retrieved on 2009-09-18]
- FATAI ZHANG ET AL.: 'Generalized Multi-Protocol Label Switching (GMPLS) Signaling Extensions for the evolving G.709 Optical Transport Networks Control' NETWORK WORKING GROUP, INTERNET DRAFT 09 July 2010, pages 1 - 22, XP015069879
- BERGER L.: 'RFC3471: Generalized Multi-Protocol Label Switching (GMPLS) Signaling Functional Description.' IETF, NETWORK WORKING GROUP January 2003, pages 1 - 34, XP015009254

## Description

### FIELD OF THE INVENTION

The present invention relates to the field of communication technologies, and in particular to a lossless bandwidth adjustment method, device and system.

### BACKGROUND OF THE INVENTION

As a core technology of a next generation transport network, an OTN (Optical Transport Network, optical transport network) can implement flexible scheduling and management of high-capacity services, and increasingly becomes a mainstream technology of a backbone transport network.

The initial OTN standard defines three types of OTN containers: ODU1 (Optical Channel Data Unit, optical channel data unit), ODU2, and ODU3. To make the OTN support Ethernet and other new services to adapt to a new application scenario, the OTN standard is expanded on an original basis, where a new signal type is put forward, for example, a bandwidth-variable ODUflex.

The ODUflex is capable of carrying a CBR (Constant Bit Rate, constant bit rate) service and a packet service of any rate. When the ODUflex is used for carrying the packet service, a GFP (Generic Framing Procedure, generic framing procedure) encapsulation manner is usually used for encapsulating the packet service in the ODUflex. Because traffic of the packet service has a feature of non-real-time variation, in different time periods, the ODUflex needs to provide different bandwidths to satisfy different traffic of the packet service, and needs to perform ODUflex tunnel bandwidth adjustment in a case that the packet service is not interrupted. That is, when the traffic of the packet service is increased, a certain number of tributary slots (Tributary Slot) need to be newly added on an ODUflex path; when the traffic of the packet service is decreased, a certain number of tributary slots need to be cut on the ODUflex path.

During bandwidth adjustment, in order not to affect transmission of a client signal, it is usually required that the ODUflex can implement lossless bandwidth adjustment, that is, it is required not to affect the client signal and then cause packet loss during an adjustment process.

An ODUflex lossless bandwidth adjustment method in the prior art is as follows:
Through a network management system, a tributary slot adjusted (added or cut) in each link is designated manually node by node. For example, in a case that an ODUflex bandwidth is increased, during a bandwidth adjustment process, an idle tributary slot is selected by a network manager from each link, and an ODUflex lossless bandwidth increase command is sent to each node through the network management system, where the command contains a serial number of the selected tributary slot, and after receiving the command, each node adds a corresponding tributary slot according to the lossless bandwidth increase command.

The prior art has the following disadvantages:
In the bandwidth adjustment process of the ODUflex, manual participation is needed, and the tributary slot adjusted in each link needs to be manually designated. Therefore, a configuration error easily occurs. For example, in two adjacent nodes A and B, if serial numbers of designated tributary slots are different, an error occurs.

XP031704652discloses that Flexible optical channel data unit (ODUflex) is a new technique in the optical transport network (OTN) used to replace virtual concatenation (VCAT). For packet clients it will be advantageous while ODUflex has the capability of hitless resizing like link capacity adjustment scheme (LCAS). A novel scheme is proposed in the paper far this purpose. The proposed scheme designs the new overhead (OH) and new protocol to achieve ODUflex hitless resizing. Moreover, it can be easily implemented in practical application

XP015071689 discloses a new approach to Generalized Multiprotocol Label Switching (GMPLS) bandwidth advertisement aiming at providing the Network Elements (NEs) and Path Computation Elements (PCEs) with all the data required for crank-backs minimization and scalability optimization. A new Open Shortest Path First - Traffic Engineering (OSPF-TE) routing protocol sub-tlv is defined for bandwidth advertisement per service type

XP015069962 discloses that interworking between regions with 1.25G TS and 2.5G TS has been considered in G.709. Multi stages multiplexing/demultiplexing would be desirable to facilitate the introduction of new ODU0 and ODUflex signals to an existing network without having to upgrade every node in the network. So ODU0/ODUflex can be mapped into ODU1/ODU2/ODU3 and transit across the 2.5G TS region. Multi stages multiplexing/demultiplexing are also used to support the multi-domain OTN applications based on the tunnel design. If there are a large number of circuits that share the same endpoints (or even part of an overall path), it may be convenient from a management perspective to first multiplex those ODU0, ODU1 and ODUflex into ODU2 or ODU3 to minimize the number of connections that need to be made in intermediate nodes. The ODU2/ODU3 effectively creates a tunnel through the ODU4 network that the ODU0, ODU1 and ODUflex can use. The requirement of multi stages multiplexing configuration associated with some specific scenarios in G.709 Optical Transport Network are described.

XP015069879 discloses that recent progress in ITU-T Recommendation G.709 standardization has introduced new ODU containers (ODU0, ODU4, ODU2e and ODUflex) and enhanced Optical Transport Networking (OTN) flexibility. Several recent documents have proposed ways to modify GMPLS signaling protocols to support these new OTN features. It is important that a single solution is developed for use in GMPLS signaling and routing protocols. This solution must support ODUk multiplexing capabilities, address all of the new features, be acceptable to all equipment vendors, and be extensible considering continued OTN evolution. The extensions to the Generalized Multi-Protocol Label Switching (GMPLS) signaling to control the evolving Optical Transport Networks (OTN) addressing ODUk multiplexing and new features including ODU0, ODU4, ODU2e and ODUflex are described.

### SUMMARY OF THE INVENTION

Embodiments of the present invention provide a lossless bandwidth adjustment method, device and system, so as to avoid problems brought by manual bandwidth adjustment, such as a low operation speed and easy occurrence of an error.

The embodiments of the present invention are implemented through the following technical solutions:

An embodiment of the present invention provides a lossless bandwidth adjustment method for an Optical Transport Network, including:
receiving, by a downstream node of a bandwidth-variable optical channel data unit ODUflex path, a request message from an upstream node of the ODUflex path, where the request message carries a tunnel identifier tunnel ID of the ODUflex path, bandwidth information after adjustment and a new label switching path identifier, LSP ID, the request message is used for requesting lossless adjustment of a bandwidth of the ODUflex path, and the request message is sent by a first node of the ODUflex path along the ODUflex path downstream node by node to a last node;
saving, by the downstream node, control information of an LSP after adjustment, wherein the control information comprises the tunnel ID, the bandwidth information after adjustment and the new LSP ID;
searching by the downstream node according to the tunnel identifier to obtain bandwidth information before adjustment of the ODUflex path, comparing the bandwidth information before adjustment with the bandwidth information after adjustment, determining the number of tributary slots that need to be adjusted for a link between the downstream node and an adjacent upstream node, and selecting a tributary slot that needs to be adjusted; and
indicating, by the downstream node and through a label, a tributary slot after adjustment of the adjacent upstream node or the selected tributary slot that needs to be adjusted, and sending a tributary slot adjustment command to a data plane, so that the data plane performs tributary slot adjustment and ODUflex bit rate adjustment according to the tributary slot adjustment command.

An embodiment of the present invention provides a lossless bandwidth adjustment method for an Optical Transport Network, including:
receiving, by a downstream node of a bandwidth-variable optical channel data unit ODUflex path, a request message from an upstream node, where the request message carries a tunnel identifier tunnel ID of the ODUflex path, a new label switching path identifier, LSP ID, bandwidth information after adjustment and a label that contains tributary slot adjustment information determined by the upstream node, the request message is used for requesting lossless adjustment of a bandwidth of the ODUflex path, and the tributary slot adjustment information includes a tributary slot after adjustment or a tributary slot that needs to be adjusted and is selected by the upstream node;
saving, by the downstream node, control information of an LSP after adjustment, wherein the control information of the LSP comprises the tunnel ID, the new LSP ID, the bandwidth information after adjustment and the label that contains tributary slot adjustment information determined by the upstream node
sending, by the downstream node, a first tributary slot adjustment command to a data plane according to the tributary slot adjustment information, and in a case that the current node is not a last node of the ODUflex path, searching according to the tunnel identifier to obtain bandwidth information before adjustment of the ODUflex path, comparing the bandwidth information after adjustment with the bandwidth information before adjustment, determining the number of tributary slots that need to be adjusted for a link between the downstream node and a next node adjacent to this downstream node, determining tributary slot adjustment information according to the number of tributary slots that need to be adjusted, and continuing to send, to the next node, a request message that carries the tunnel ID of the ODUflex path, the new LSP ID, the bandwidth information after adjustment and a label that contains the tributary slot adjustment information determined by the downstream node;
sending, by the downstream node, a second tributary slot adjustment command to the data plane; and
performing, by the data plane, tributary slot adjustment and ODUflex bit rate adjustment according to the first tributary slot adjustment command and the second tributary slot adjustment command, where the data plane adjusts a tributary slot of a link connection between the upstream node and the downstream node according to the first tributary slot adjustment command, and adjusts a tributary slot of a link connection between the downstream node and the adjacent next node according to the second tributary slot adjustment command.

An embodiment of the present invention provides a node device on an ODUflex path, where the node device includes:
a receiving unit, configured to receive a request message from an upstream node of the ODUflex path, where the request message carries a tunnel identifier tunnel ID of the ODUflex path, bandwidth information after adjustment and a new label switching path identifier, LSP ID, and the request message is used for requesting lossless adjustment of a bandwidth of the ODUflex path;
a saving unit, configured to save control information of an LSP after adjustment, wherein the control information comprises the tunnel ID, the bandwidth information after adjustment and the new LSP ID;
a tributary slot allocating unit, configured to search according to the tunnel identifier to obtain bandwidth information before adjustment of the ODUflex path, compare the bandwidth information before adjustment with the bandwidth information after adjustment, determine the number of tributary slots that need to be adjusted for a link between the node device and an adjacent upstream node, and select a tributary slot that needs to be adjusted; and
an indicating unit, configured to indicate, through a label, a tributary slot after adjustment of the adjacent upstream node or the selected tributary slot that needs to be adjusted, and send a tributary slot adjustment command to a data plane, so that the data plane performs tributary slot adjustment and ODUflex bit rate adjustment according to the tributary slot adjustment command.

An embodiment of the present invention provides a node device on an ODUflex path, where the node device includes:
a second receiving unit, configured to receive a request message sent by an upstream node, wherein the request message carries a tunnel identifier tunnel ID, tunnel ID, of the ODUflex path, a new label switching path identifier, LSP ID, bandwidth information after adjustment and a label that contains tributary slot adjustment information determined by the upstream node, the request message is used for requesting lossless adjustment of a bandwidth of the ODUflex path, and the tributary slot adjustment information comprises a tributary slot after adjustment or a tributary slot that needs to be adjusted and is selected by the upstream node;
a saving unit, configured to save control information, wherein the control information comprises the tunnel ID, the new LSP ID, the bandwidth information after adjustment and the label that contains tributary slot adjustment information determined by the upstream node;
a tributary slot allocating unit, configured to: in a case that a current node is not a last node of the ODUflex path, compare bandwidth information after adjustment of the ODUflex path with bandwidth information before adjustment, determine the number of tributary slots that need to be adjusted for a link between the current node and an adjacent next node, and determine tributary slot adjustment information according to the number of tributary slots that need to be adjusted, where the tributary slot adjustment information includes: a tributary slot after adjustment or a selected tributary slot that needs to be adjusted;
a sending unit, configured to send a request message to a downstream node, where the request message carries the tunnel identifier tunnel ID of the ODUflex path, the new LSP ID, the bandwidth information after adjustment and a label that contains the tributary slot adjustment information determined by the current node, and the request message is used for requesting lossless adjustment of a bandwidth of the ODUflex path; and
an indicating unit, configured to send a first tributary slot adjustment command to a data plane according to the tributary slot adjustment information, so that the data plane adjusts a tributary slot of a link connection between the current node and the adjacent next node according to the first tributary slot adjustment command, further configured to send a second tributary slot adjustment command to the data plane according to the tributary slot adjustment information in the request message received by the second receiving unit, so that the data plane adjusts a tributary slot of a link connection between the upstream node and the current node according to the second tributary slot adjustment command.

It can be seen from the technical solutions provided by the embodiments of the present invention that, the ODUflex lossless bandwidth adjustment solution described in the embodiments implements automatic ODUflex lossless bandwidth adjustment without the need of manual participation, and therefore, problems caused by manual bandwidth adjustment, such as a heavy work load and a configuration error, are avoided. Moreover, because an adjustment command does not need to be sent manually node by node during an ODUflex lossless bandwidth adjustment process, a bandwidth adjustment speed is increased, and a bandwidth adjustment requirement of a customer is satisfied rapidly.

### BRIEF DESCRIPTION OF THE DRAWINGS

FIG. 1 is a flowchart of a lossless bandwidth adjustment method according to Embodiment 1 of the present invention;
FIG. 2 is a schematic diagram of a lossless bandwidth increase process according to Embodiment 1 of the present invention;
FIG. 3 is a schematic diagram of a lossless bandwidth decrease process according to Embodiment 2 of the present invention;
FIG. 4 is a flowchart of a lossless bandwidth adjustment method according to Embodiment 2 of the present invention;
FIG. 5 is a schematic diagram of a lossless bandwidth increase process according to Embodiment 3 of the present invention;
FIG. 6 is a schematic diagram of a lossless bandwidth decrease process according to Embodiment 4 of the present invention;
FIG. 7 is a schematic structural diagram of a node device according to Embodiment 3 of the present invention;
FIG. 8 is a schematic structural diagram of another node device according to Embodiment 3 of the present invention;
FIG. 9 is a schematic structural diagram of a node device according to Embodiment 4 of the present invention;
FIG. 10 is a schematic structural diagram of another node device according to Embodiment 4 of the present invention;
FIG. 11 is a schematic structural diagram of still another node device according to Embodiment 4 of the present invention; and
FIG. 12 is a schematic structural diagram of yet another node device according to Embodiment 4 of the present invention.

### DETAILED DESCRIPTION OF THE EMBODIMENTS

The following clearly and completely describes the technical solutions in the embodiments of the present invention with reference to the accompanying drawings in the embodiments of the present invention. It may be understood that the described embodiments are merely a part rather than all of the embodiments of the present invention. All other embodiments obtained by persons of ordinary skill in the art based on the embodiments of the present invention without creative efforts shall fall within the protection scope of the present invention.

### Embodiment 1

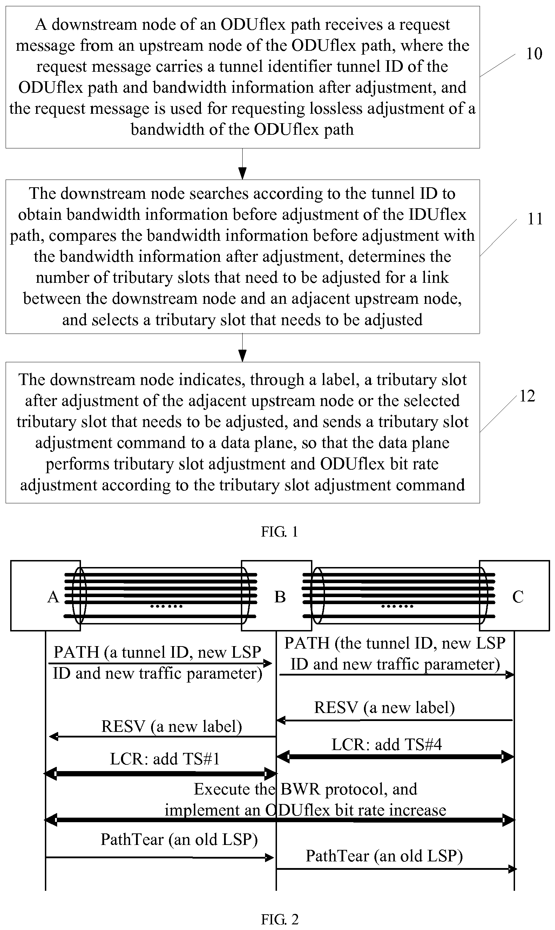

Embodiment 1 of the present invention provides a lossless bandwidth adjustment method. In this embodiment, that a downstream node of each link allocates a tributary slot is taken as an example for illustration. As shown in FIG. 1, the following steps are included:
Step 10: A downstream node of an ODUflex path receives a request message from an upstream node of the ODUflex path, where the request message carries a tunnel ID (tunnel identifier) of the ODUflex path and bandwidth information after adjustment, and the request message is used for requesting lossless adjustment of a bandwidth of the ODUflex path.

The request message is sent by a first node of the ODUflex path along the ODUflex path downstream node by node to a last node.

The first node of the ODUflex path allocates one new LSP ID (label switching path identifier) to the ODUflex path after adjustment, while the tunnel ID remains unchanged, and the new LSP ID is carried in the request message. That is, on a control plane, an LSP after bandwidth adjustment and an LSP before bandwidth adjustment are regarded as two LSPs (LSP IDs are different), but belong to a same session Session (tunnel IDs are the same).

In one embodiment, the request message may be a Path (path) message in the RSVP-TE (Resource ReserVation Protocol-Traffic Engineering, resource reservation protocol-traffic engineering) protocol. An existing SE (Shared Explicit Style, shared explicit style) flag bit may be set to 1 in a Session Attribute Object (session attribute object) in the Path message, so as to implicitly indicate that the message is used for requesting the lossless adjustment of the bandwidth of the ODUflex; and one flag bit may also be newly added to the Path message, so as to explicitly indicate that the message is used for requesting the lossless adjustment of the bandwidth of the ODUflex.

Step 11: The downstream node searches according to the tunnel ID to obtain bandwidth information before adjustment of the ODUflex path, compares the bandwidth information before adjustment with the bandwidth information after adjustment, determines the number of tributary slots that need to be adjusted for a link between the downstream node and an adjacent upstream node, and selects a tributary slot that needs to be adjusted.

Because the tunnel ID of the ODUflex path is unchanged before and after the bandwidth adjustment, each node that receives the request message may find, according to the tunnel ID and on the control plane, control information before the bandwidth adjustment, and may obtain, from the control information before the bandwidth adjustment, the bandwidth information before adjustment. By comparing the bandwidth information before adjustment with the bandwidth information after adjustment, it may be determined that whether this bandwidth adjustment is a bandwidth increase or a bandwidth decrease, so as to determine how to adjust the tributary slot. If a bandwidth after adjustment is greater than a bandwidth before adjustment, the number of tributary slots needs to be increased; if the bandwidth after adjustment is smaller than a s needs to be decreased.

The determining the number of tributary slots that need to be adjusted for the link between the downstream node and the adjacent upstream node and selecting the tributary slot that needs to be adjusted is that: The downstream node of each link determines, according to a result of comparing the bandwidth before adjustment with the bandwidth after adjustment, the number of tributary slots that need to be adjusted for this link this time, and according to the determined number of tributary slots that need to be adjusted, allocates the tributary slot that needs to be adjusted. A bandwidth that may be provided by each tributary slot is a transport resource of 1.25 Gbps. For example, for an ODU link A-B, a downstream node B determines, by comparing bandwidths before and after adjustment, that one tributary slot bandwidth before adjustment, the number of tributary slots needs to be added for this ODUflex. If this ODUflex originally occupies tributary slots numbered 2, 3 and 4 in the link A-B, the node B may randomly select an idle tributary slot in the link, for example, select a tributary slot numbered 1 and add the tributary slot numbered 1 to a link connection Link Connection of the ODUflex between A and B. The link connection refers to a transport entity used for transporting a certain service in a segment of a link. For example, one or more tributary slots in one ODU link are used for transporting one ODUflex service, and then, a transport entity formed by the one or more tributary slots is referred to as a link connection of an ODUflex in this link.

After receiving the request message, each node on the ODUflex path creates a control state on the control plane for the path after adjustment, and saves control information, where the saved control information includes the tunnel ID and the bandwidth information after adjustment, and further includes the LSP ID. In an intelligent transport network, each node may be logically divided into two parts: a control plane part and a data plane part. The control plane part is used for executing operations such as obtaining data plane information, sending, receiving and processing a control plane protocol message, and sending a command to a data plane; while the data plane part provides a transport bandwidth and executes an operation of forwarding user data. For an OTN device, its data plane further needs to process an overhead byte, so as to implement a specific function of the data plane, such as performance and failure monitoring. A control plane of a node may interconnect with another node through a control tunnel; and a data plane of the node may interconnect with another node through a data link. In an OTN network, the data link may be an ODU link.

Step 12: The downstream node indicates tributary slot adjustment information to the adjacent upstream node through a label, and sends a tributary slot adjustment command to a data plane, so that the data plane performs tributary slot adjustment and ODUflex bit rate adjustment according to the tributary slot adjustment command.

The tributary slot adjustment information includes: a tributary slot after adjustment or the selected tributary slot that needs to be adjusted.

That the downstream node indicates the tributary slot adjustment information to the adjacent upstream node through the label includes that:

The downstream node sends, to the upstream node, a response message, which carries an old label and a new label, where the new label contains a tributary slot that is occupied by the ODUflex path after adjustment in a link between the upstream node and the downstream node, and the old label contains a tributary slot that is occupied by the ODUflex path before adjustment in the link between the upstream node and the downstream node; and then the upstream node compares the new label with the old label to know the tributary slot that needs to be adjusted; or
the downstream node sends, to the upstream node, a response message, which carries a new label, where the new label contains a tributary slot that is occupied by the ODUflex path after adjustment in a link between the upstream node and the downstream node; and then the upstream node searches according to the tunnel ID in the request message to obtain an old label of the ODUflex path, where the old label contains a tributary slot that is occupied by the ODUflex path before adjustment in the link between the upstream node and the downstream node; and compares the new label with the old label to know the tributary slot that needs to be adjusted; or
the downstream node sends a response message upstream, which carries a new label, where the new label contains the selected tributary slot that needs to be adjusted, and indicates whether this tributary slot adjustment is an increase of the number of tributary slots or a decrease of the number of tributary slots.

Each node on the ODUflex path saves the new label to a control state corresponding to the ODUflex path after adjustment.

After determining tributary slot adjustment information, each node on the ODUflex path sends a tributary slot adjustment command to a data plane. That is, after determining tributary slot adjustment information, the upstream node and the downstream node of a link both send a tributary slot adjustment command to their respective data planes.

That the data plane performs the tributary slot adjustment and the ODUflex bit rate adjustment according to the tributary slot adjustment command includes that:

If the tributary slot adjustment command is a tributary slot increase command, the data plane performs the ODUflex bit rate adjustment after tributary slot adjustment of all link connections on the ODUflex path is completed; and
if the tributary slot adjustment command is a tributary slot decrease command, the data plane performs tributary slot adjustment of a link connection on the ODUflex path after completing the ODUflex bit rate adjustment.

Each node on the ODUflex path saves, to the control state corresponding to the ODUflex path after adjustment, information of a tributary slot that is used by the ODUflex path after adjustment.

The data plane notifies the control plane after completing the tributary slot adjustment and the bit rate adjustment. If the control plane receives a notification that the tributary slot adjustment and the bit rate adjustment are successfully completed, the first node of the ODUflex path sends a deletion indication message along the ODUflex path downstream node by node, for removing, on the control plane, a control state corresponding to an LSP before bandwidth adjustment.

If the control plane receives a tributary slot adjustment failure indication or an ODUflex bit rate adjustment failure indication sent by the data plane, the embodiment of the present invention provides a rollback mechanism, including:

The first node of the ODUflex path sends a rollback indication message along the ODUflex path downstream node by node; and
after receiving the rollback indication message, each node on the ODUflex path judges whether the tributary slot adjustment of the data plane is successful previously, and if successful, executes a tributary slot adjustment rollback operation, and rolls back to a state before the tributary slot adjustment, that is, deletes an added tributary slot, or adds a cut tributary slot to a link connection.

Meanwhile, if the control plane receives the tributary slot adjustment failure indication or the ODUflex bit rate adjustment failure indication sent by the data plane, each node on the ODUflex path further deletes, on the control plane, a control state corresponding to an LSP after bandwidth adjustment.

The ODUflex lossless bandwidth adjustment solution described in this embodiment implements automatic ODUflex lossless bandwidth adjustment without the need of manual participation, and therefore, problems caused by manual bandwidth adjustment, such as a heavy work load and a configuration error, are avoided. Moreover, because an adjustment command does not need to be sent manually node by node during an ODUflex lossless bandwidth adjustment process, a bandwidth adjustment speed is increased, and a bandwidth adjustment requirement of a customer is satisfied rapidly.

Meanwhile, the embodiment of the present invention provides the rollback mechanism, where in a case of adjustment failure, a state before adjustment may be rolled back to, which effectively increases reliability of ODUflex lossless bandwidth adjustment.

For further understanding of Embodiment 1 of the present invention, the following describes the solution of Embodiment 1 in detail by using specific examples.

Example 1: What is shown in FIG. 2 is taken as an example, and is a bandwidth increase procedure.

It is assumed that an ODUflex path with a bandwidth of 3.75 Gbps exists among nodes A, B and C" its tunnel ID and LSP ID have been allocated, each node saves a control state of an ODUflex before bandwidth adjustment, where the control state of the ODUflex before bandwidth adjustment includes the tunnel ID, the LSP ID and a traffic parameter (used for describing a bandwidth value of the ODUflex) of the ODUflex, and a label value of the ODUflex in each link (used for describing a tributary slot occupied by the ODUflex in each link). If a first node A of the ODUflex receives a command requiring an increase of a bandwidth of the ODUflex to 5 Gbps, a lossless bandwidth adjustment process is as follows:
(1) The first node A allocates one new LSP ID to the ODUflex path, while the tunnel ID remains unchanged.
(2) The node A sends a Path message downstream node by node, until to a last node C. The Path message carries the tunnel ID, the new LSP ID and a new traffic parameter (used for describing a bandwidth of the ODUflex after adjustment, that is, 5 Gbps), and indicates that this message is an ODUflex lossless bandwidth adjustment message.
   The node A creates a control state on a control plane for an LSP after adjustment, saves control information of the LSP, where the control information of the LSP includes the tunnel ID, the new LSP ID, the new traffic parameter and so on.
(3) Each node receives the Path message, creates a control state on a control plane for the LSP after adjustment, and saves the control information of the LSP.
(4) The last node C knows, according to an "ODUflex lossless adjustment indication" in the received message, that ODUflex bandwidth adjustment needs to be performed. The node C finds, according to the tunnel ID and on a control plane, a control state corresponding to an LSP before adjustment, so as to obtain, from the control state corresponding to the LSP before adjustment, a traffic parameter of the LSP before adjustment, compares the traffic parameter of the LSP before adjustment with the new traffic parameter, and calculates that the bandwidth is increased by 1.25 Gbps. Therefore, one tributary slot needs to be added. Accordingly, the node C selects one new idle tributary slot in a link B-C, for example, a tributary slot numbered 4, and sends a Resv (Reservation, reservation) message to a node B, where the message contains a new label, and the label indicates a tributary slot used by the ODUflex in the link B-C after the bandwidth adjustment, for example, labels numbered 1, 2, 3, and 4. In addition, the Resv message may contain both the new label and an old label of the ODUflex before adjustment in the link B-C.
(5) On the control plane, the last node C saves, to a control state corresponding to the LSP after adjustment, information of the tributary slot used by the ODUflex after the bandwidth adjustment; and at the same time, triggers LCR (Link Connection Resizing, link connection resizing) protocol running of a data plane of the node C, to add a newly reserved tributary slot to a link connection between B and C;
   The embodiment of the present invention does not limit a sequence of the operation that the node C sends the Resv message to the node B, the operation that the node C saves, on its control plane, the information of the tributary slot used by the ODUflex after adjustment, and the operation of triggering LCR by the node C on its data plane.
(6) The node B receives the Resv message, and knows, according to a value of the label, a label of a tributary slot that is numbered 1, 2, 3, or 4 and used in the link B-C. Then the node B finds, according to the tunnel ID and on a control plane, control information corresponding to the LSP before adjustment, obtains, from the control information corresponding to the LSP before adjustment, the old label of the ODUflex before adjustment in the link B-C, and compares the old label with the new label, so as to know the tributary slot newly added in the link B-C. Alternatively, if the Resv message received by the node B further contains the old label of the ODUflex before adjustment in the link B-C, the node B directly compares the new label with the old label, so as to know the tributary slot newly added in the link B-C.
(7) On the control plane, the node B saves, to a control state corresponding to the LSP after adjustment, the information of the tributary slot used by the ODUflex after the bandwidth adjustment; and at the same time, triggers LCR protocol running of a data plane of the node B, to add the newly reserved tributary slot to the link connection between B and C.
   A specific process that the nodes B and C run LCR on their data planes is as follows: The nodes B and C transport, on OTN data planes, the LCR protocol through a first overhead byte in an ODU frame, perform a handshake with each other, and in a next ODU multiframe after completion of the handshake, add a newly added tributary slot to the ODUflex link connection; and after success, change a GMP (Generic Mapping Procedure, generic mapping procedure) encapsulation manner into a special mode (special mode), where in this mode, a data plane of a node allows adjustment to be performed on a bit rate of the ODUflex.
(8) In the same way, the node B and the node A also reserve a new tributary slot in a link A-B, for example, a tributary slot numbered 1, and trigger the LCR protocol on data planes.
(9) After the LCR protocol is completed on data planes in all links through which the ODUflex passes, the first node A is automatically triggered to perform the BWR (BandWidth Resizing, bandwidth resizing) protocol, to complete an increase of the rate of the ODUflex.
   The BWR protocol is transported on an OTN data plane through a second overhead byte in the ODU frame. A process that the first node A is automatically triggered to perform the BWR protocol is as follows:
   (a) After receiving the ODUflex lossless bandwidth adjustment message, before starting the LCR protocol, each node blocks the second overhead byte used by the BWR protocol, that is, ignores information in the overhead byte for transporting BWR, so that the information in the BWR overhead byte cannot be transferred to a next node.
   (b) Between adjacent nodes, for example, between A and B or between B and C, after the LCR protocol is successfully run, the blocking of the BWR overhead byte is stopped, that is, the BWR overhead byte is transferred transparently.
   (c) After all nodes complete LCR, a BWR overhead byte of the first node A may be transferred transparently to the last node C, and the last node C also responds with a BWR overhead byte after reception. After receiving a BWR response message, the first node A adjusts the ODUflex rate in a next ODU multiframe, and after the adjustment succeeds, indicates adjustment success through a BWR overhead. After receiving a BWR success indication, each node of the ODUflex path closes the GMP special mode.
(10) After successfully completing the BWR protocol on a data plane, the first node A notifies its control plane.
(11) The first node A sends a PathTear message to a downstream node hop by hop, for removing, on the control plane, the LSP before bandwidth adjustment, that is, deletes, on the control plane, the control state corresponding to the LSP before adjustment.

It should be noted that, the ODUflex lossless bandwidth adjustment process cannot be nested. That is, for a same ODUflex service, after initiating first ODUflex lossless bandwidth adjustment, and before completing the adjustment, the first node cannot initiate a next operation of ODUflex lossless bandwidth adjustment. Correspondingly, in the ODUflex lossless adjustment process, on the control plane of each node, at most two control states can be saved for the ODUflex path, one for saving control information of the LSP before adjustment, and the other for saving control information of the LSP after adjustment.

On the data plane, if there is a failure in LCR running, which causes that the node A cannot start the BWR protocol before time expires (that is, in a period of time after starting the ODUflex bandwidth adjustment, the node A does not receive the BWR response message), or if the node A fails after running the BWR protocol, the node A sends the PathTear message to the downstream node node by node, indicates deletion of the control state corresponding to the LSP after adjustment, and performs a rollback operation on the data plane. A node that receives the PathTear message first judges whether LCR between the current node and an upstream node is successfully run previously; if successful, needs to run the LCR protocol again, and deletes a previously added tributary slot from a link connection; if unsuccessful, does not need to perform a rollback operation on a control plane. In addition, each node further deletes the control state corresponding to the LSP after adjustment and is created on the control plane previously.

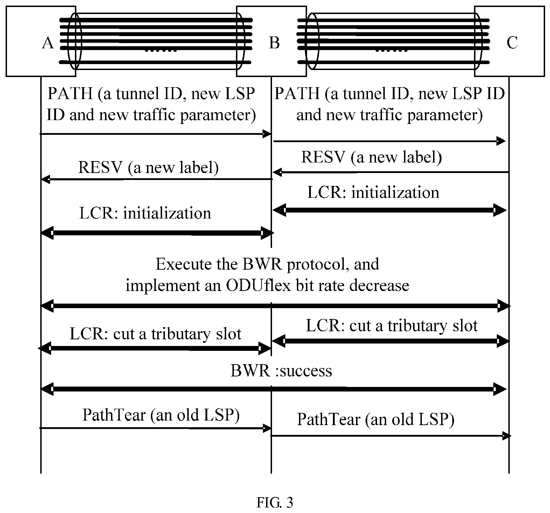

Example 2: What is shown in FIG. 3 is taken as an example, and is a bandwidth decrease procedure.

It is assumed that an ODUflex path with a bandwidth of 5 Gbps exists among nodes A, B and C" its tunnel ID and LSP ID have been allocated, each node saves a control state of an ODUflex before bandwidth adjustment, where the control state of the ODUflex before bandwidth adjustment includes the tunnel ID, the LSP ID and a traffic parameter (used for describing a bandwidth value of the ODUflex) of the ODUflex, and a label value of the ODUflex in each link (used for describing a tributary slot occupied by the ODUflex in each link). If a first node A of the ODUflex receives a command requiring a decrease of a bandwidth of the ODUflex to 3.75 Gbps, a lossless bandwidth adjustment process is relatively similar to the bandwidth increase process in Example 1, where main differences are as follows:
(1) On a control plane, a bandwidth value in a new traffic parameter in a Path message is smaller than an original one, and each node compares new and old bandwidths to know that the bandwidth needs to be decreased. In a Resv message, a tributary slot to be cut is obtained by comparing a new label with an old label, or a new label directly carries a tributary slot to be cut.
(2) On a data plane, a bandwidth decrease process is the opposite of a bandwidth increase process, and requires that a rate of the ODUflex is decreased and then a tributary slot is cut from a link connection. A specific process is:

Each node on the ODUflex path receives the Resv message, and after determining the tributary slot that needs to be cut, on the data plane, first run LCR to perform link connection resizing initialization, which specifically is: Each node on the ODUflex path blocks a second overhead byte used by the BWR protocol; then, an LCR protocol handshake is performed between each pair of adjacent nodes, and after completing the handshake, two adjacent nodes both change a GMP encapsulation manner into a special mode, and then stop blocking BWR, that is, transparently transfer a BWR overhead byte, while temporarily suspending the LCR protocol.

After LCR of all links through which the ODUflex passes is successfully initialized, BWR is run between the first node A and a last node C, to decrease the rate of the ODUflex, which specifically is: After the LCR of all links through which the ODUflex passes is successfully initialized, a BWR overhead byte of the first node A may be transparently transferred to the last node C, and the last node C also responds with a BWR overhead byte after reception; after receiving a BWR response message, the first node A adjusts the ODUflex rate in a next ODU multiframe, and after the adjustment succeeds, indicates adjustment success through a BWR overhead to each node on the ODUflex path.

Finally, the LCR protocol is run in each node through which the ODUflex passes, and a previously designated tributary slot is deleted from a corresponding link connection. Specifically, after receiving a BWR success indication, each node of the ODUflex path closes a GMP special mode, and at the same time, each pair of adjacent nodes deletes the designated tributary slot from the link connection of the ODUflex in the next ODU multiframe after the LCR protocol handshake.

If an abnormality occurs when the data plane performs LCR or BWR, and causes that the bandwidth adjustment is unsuccessful, a rollback operation needs to be performed, and a state before the bandwidth adjustment is restored, which is specifically as follows:
(1) After receiving a Resv response message, the first node A waits for a result of bandwidth adjustment of a data plane. If the bandwidth adjustment of the data plane of the node A is unsuccessful, an adjustment error is reported to a control plane of the node A.
(2) The node A sends a PathTear message along an LSP direction node by node to a downstream node, to request that an LSP after bandwidth adjustment is deleted on the control plane, that is, that a control state of the LSP after bandwidth adjustment is deleted on the control plane.
(3) Each node that receives the message judges whether a previous tributary slot decrease operation is successful; if successful, needs to run the LCR protocol again, and adds a cut tributary slot to a link connection again; if unsuccessful, does not need this rollback operation. At the same time, each node deletes a control state that is of the LSP after bandwidth adjustment and is created on the control plane previously.

### Embodiment 2

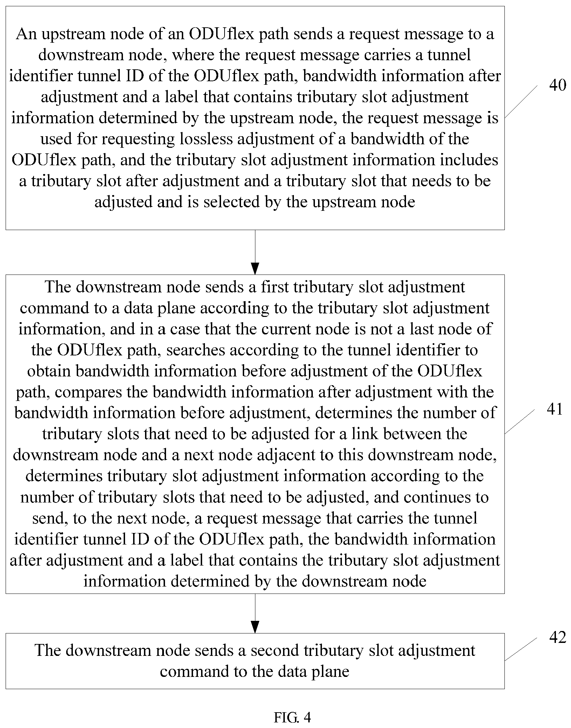

A difference between this embodiment and Embodiment 1 is that, that an upstream node of each link on an ODUflex path allocates a tributary slot is taken as an example for illustration in this embodiment. As show in FIG. 4, the following steps are included:
Step 40: An upstream node of an ODUflex path sends a request message to a downstream node, where the request message carries a tunnel identifier tunnel ID of the ODUflex path, bandwidth information after adjustment and a label that contains tributary slot adjustment information determined by the upstream node, the request message is used for requesting lossless adjustment of a bandwidth of the ODUflex path, and the tributary slot adjustment information includes a tributary slot after adjustment or a tributary slot that needs to be adjusted and is selected by the upstream node.

The request message is first sent by a first node of the ODUflex path along the ODUflex path to a node adjacent to the first node.

After determining the tributary slot adjustment information, the upstream node saves, to a control state corresponding to an LSP after adjustment, information of a tributary slot used by an ODUflex after bandwidth adjustment; and at the same time, triggers LCR protocol running of a data plane of the upstream node to perform tributary slot adjustment and ODUflex bit rate adjustment.

The first node of the ODUflex path allocates one new LSP ID (label switching path identifier) to the ODUflex path after adjustment, while the tunnel ID remains unchanged, and the new LSP ID is carried in the request message. That is, on a control plane, an LSP after bandwidth adjustment and an LSP before bandwidth adjustment are regarded as two LSPs (LSP IDs are different), but belong to a same session Session (tunnel IDs are the same).

In one embodiment, the request message may be a Path message in the RSVP-TE protocol. An existing SE (Shared Explicit Style, shared explicit style) flag bit may be set to 1 in a Session Attribute Object object in the Path message, so as to implicitly indicate that the message is used for requesting the lossless adjustment of the bandwidth of the ODUflex; and one flag bit may also be newly added in the Path message, so as to explicitly indicate that the message is used for requesting the lossless adjustment of the bandwidth of the ODUflex.

A method for each node of the ODUflex path to determine the tributary slot adjustment information is the same as the method that is for determining tributary slot adjustment information when an downstream node allocates a tributary slot and is described in Embodiment 1, and includes: searching according to the tunnel ID to obtain bandwidth information before adjustment of the ODUflex path, comparing the bandwidth information after adjustment with the bandwidth information before adjustment, determining the number of tributary slots that need to be adjusted between the node and an adjacent downstream node, and selecting, according to the number of tributary slots, a tributary slot that needs to be adjusted. After receiving a bandwidth adjustment command, the first node of the ODUflex path directly compares the bandwidth information after adjustment of the ODUflex path with the bandwidth information before adjustment of the ODUflex path, to determine the number of tributary slots that need to be adjusted between the first node and an adjacent downstream node, and select, according to the number of tributary slots, a tributary slot that needs to be adjusted.

Step 41: The downstream node sends a first tributary slot adjustment command to a data plane according to the tributary slot adjustment information, and in a case that the current node is not a last node of the ODUflex path, searches according to the tunnel identifier to obtain bandwidth information before adjustment of the ODUflex path, compares the bandwidth information after adjustment with the bandwidth information before adjustment, determines the number of tributary slots that need to be adjusted for a link between the downstream node and a next node adjacent to this downstream node, determines tributary slot adjustment information according to the number of tributary slots that need to be adjusted, and continues to send, to the next node, a request message that carries the tunnel identifier tunnel ID of the ODUflex path, the bandwidth information after adjustment and a label that contains the tributary slot adjustment information determined by the downstream node.

By using the method in step 41, each node on the ODUflex path, as an upstream node of a link, determines tributary slot adjustment information between the node and an adjacent downstream node, and then sends a request message to the downstream node, until to the last node of the ODUflex path.

After receiving the request message, each node on the ODUflex path creates a control state on the control plane for the path after adjustment, and saves control information, where the saved control information includes the tunnel ID and the bandwidth information after adjustment, and further includes the LSP ID.

Each node on the ODUflex path saves, to a control state corresponding to the ODUflex path after adjustment (corresponding to the new LSP ID), information of a tributary slot occupied by the ODUflex path after adjustment.

A method for the upstream node to indicate the tributary slot adjustment information to the downstream node through the label is the same as the method which is for a downstream node to indicate tributary slot adjustment information to an upstream node through a label and is in Embodiment 1, and is not repeatedly described herein.

Step 42: The downstream node sends a second tributary slot adjustment command to the data plane.

In step 41 and step 42, the data plane performs the tributary slot adjustment and ODUflex bit rate adjustment according to the first tributary slot adjustment command and the second tributary slot adjustment command respectively, where the data plane adjusts a tributary slot of a link connection between the upstream node and the downstream node according to the first tributary slot adjustment command, and adjusts a tributary slot of a link connection between the downstream node and the adjacent next node according to the second tributary slot adjustment command.

That the data plane performs the tributary slot adjustment and ODUflex bit rate adjustment according to the first tributary slot adjustment command and the second tributary slot adjustment command includes:

If the first tributary slot adjustment command and the second tributary slot adjustment command are tributary slot increase commands, the data plane performs the ODUflex bit rate adjustment after tributary slot adjustment of all link connections on the ODUflex path is completed; and

If the first tributary slot adjustment command and the second tributary slot adjustment command are tributary slot decrease commands, the data plane performs tributary slot adjustment of a link connection on the ODUflex path after completing the ODUflex bit rate adjustment.

The data plane notifies the control plane after completing the tributary slot adjustment and the ODUflex bit rate adjustment. If the control plane receives a notification that the tributary slot adjustment and the bit rate adjustment are successfully completed, the first node of the ODUflex path sends a deletion indication message along the ODUflex path downstream node by node, for removing, on the control plane, a control state of an LSP before bandwidth adjustment.

If the control plane receives a tributary slot adjustment failure indication or an ODUflex bit rate adjustment failure indication sent by the data plane, the embodiment of the present invention provides a rollback mechanism, including:

The first node of the ODUflex path sends a rollback indication message along the ODUflex path downstream node by node; and
after receiving the rollback indication message, each node on the ODUflex path judges whether the tributary slot adjustment of the data plane is successful previously, and if successful, executes a tributary slot adjustment rollback operation, and rolls back to a state before the tributary slot adjustment, that is, deletes an added tributary slot, or adds a cut tributary slot to a link connection.

Meanwhile, after the control plane receives the tributary slot adjustment failure indication or the ODUflex bit rate adjustment failure indication sent by the data plane, each node on the ODUflex path further deletes, on the control plane, a control state corresponding to an LSP after bandwidth adjustment.

The ODUflex lossless bandwidth adjustment solution described in this embodiment implements automatic ODUflex lossless bandwidth adjustment without the need of manual participation, and therefore, problems caused by manual bandwidth adjustment, such as a heavy work load and a configuration error, are avoided. Moreover, because an adjustment command does not need to be sent manually node by node during an ODUflex lossless bandwidth adjustment process, a bandwidth adjustment speed is increased, and a bandwidth adjustment requirement of a customer is satisfied rapidly.

Meanwhile, the embodiment of the present invention provides the rollback mechanism, where a state before adjustment may be rolled back to in a case of adjustment failure, which effectively increases reliability of ODUflex lossless bandwidth adjustment.

For further understanding of Embodiment 2 of the present invention, the following describes the solution of Embodiment 2 in detail by using specific examples.

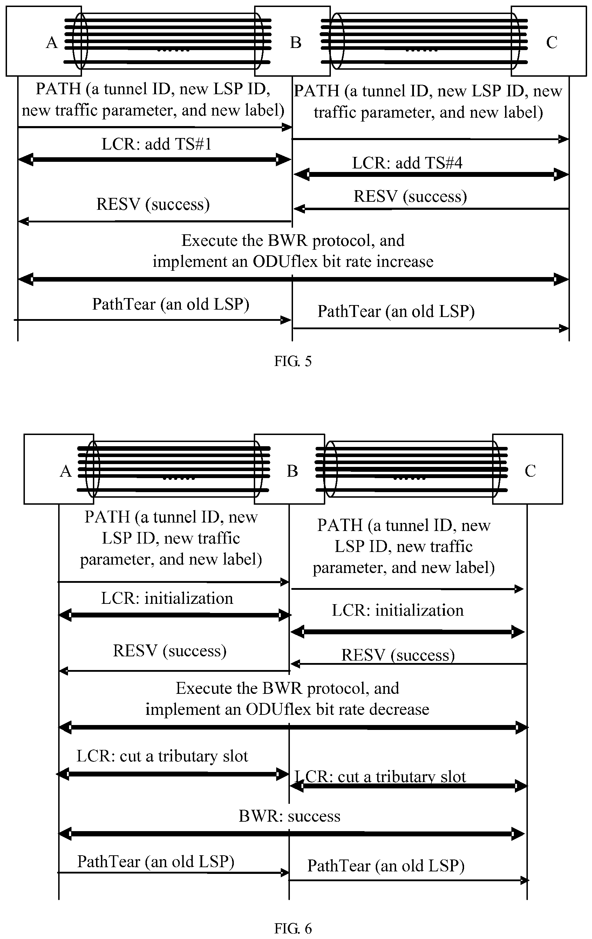

Example 3: What is shown in FIG. 5 is taken as an example, and is a bandwidth increase procedure.

It is assumed that an ODUflex path with a bandwidth of 3.75 Gbps exists among nodes A, B and C" its tunnel ID and LSP ID have been allocated, each node saves a control state of an ODUflex before bandwidth adjustment, where the control state of the ODUflex before bandwidth adjustment includes the tunnel ID, the LSP ID and a traffic parameter (used for describing a bandwidth value of the ODUflex) of the ODUflex, and a label value of the ODUflex in each link (used for describing a tributary slot occupied by the ODUflex in each link). If a first node A of the ODUflex receives a command requiring an increase of a bandwidth of the ODUflex to 5 Gbps, a lossless bandwidth adjustment process is as follows:
(1) The node A allocates one new LSP ID to the ODUflex path, while the tunnel ID remains unchanged.
(2) According to the received ODUflex bandwidth adjustment command, the node A compares ODUflex bandwidth values before and after bandwidth adjustment, calculates that the bandwidth is increased by 1.25 Gbps. Therefore, one tributary slot needs to be added. Accordingly, the node A selects one new idle tributary slot in a link A-B, for example, a tributary slot numbered 1, and sends a Path message to a node B, where the message carries the tunnel ID, the new LSP ID and a new traffic parameter (used for describing a bandwidth of the ODUflex after adjustment, that is, 5 Gbps), and indicates that the message is an ODUflex lossless bandwidth adjustment message. At the same time, the message further contains a new label, and the label indicates a tributary slot used by the ODUflex in the link A-B after the bandwidth adjustment, for example, labels numbered 1, 2, 3, and 4. In addition, the Path message may also contain both the new label and an old label of the ODUflex before adjustment in the link A-B.
   The node A creates a control state on a control plane for an LSP after adjustment, saves control information of the LSP, where the control information of the LSP includes the tunnel ID, the new LSP ID, the new traffic parameter, the new label and so on.
   At the same time, the node A triggers LCR (Link Connection Resizing, link connection resizing) protocol running of its data plane, and adds a newly reserved tributary slot to a link connection between A and B.
(3) The node B receives the Path message, and knows, according to an "ODUflex lossless adjustment indication" in the received message, that ODUflex bandwidth adjustment needs to be performed; and at the same time, creates a control state on a control plane for the LSP after adjustment, and saves control information of the LSP.
   The node B knows, according to a value of the label, a label of a tributary slot that is numbered 1, 2, 3, or 4 and used in the link A-B. Then the node B finds, according to the tunnel ID and on the control plane, control information corresponding to an LSP before adjustment, obtains, from the control information corresponding to the LSP before adjustment, an old label of the LSP before adjustment in the link A-B, and compares the old label with the new label, so as to know the tributary slot newly added in the link A-B. Alternatively, if the Path message received by the node B further contains the old label of the ODUflex before adjustment in the link A-B, the node B directly compares the new label with the old label, so as to know the tributary slot newly added in the link A-B.
(4) On the control plane, the node B saves, to the control information corresponding to the LSP after adjustment, information of the tributary slot used by the ODUflex after the bandwidth adjustment; and at the same time, triggers LCR protocol running of a data plane of the node B, and adds the newly reserved tributary slot to the link connection between A and B.
   A specific process that the nodes A and B run LCR on their data planes is as follows: The nodes A and B transport, on OTN data planes, the LCR protocol through a first overhead byte in an ODU frame, perform a handshake with each other, and in a next ODU multiframe after completion of the handshake, add a newly added tributary slot to the ODUflex link connection; and after success, change a GMP encapsulation manner into a special mode (special mode).
(5) As an upstream node of a link B-C, the node B finds, according to the tunnel ID in the received Path message and on the control plane, a control state corresponding to the LSP before adjustment, and obtains, from the control state corresponding to the LSP before adjustment, the traffic parameter of the LSP before adjustment and an old label of the ODUflex before adjustment on the link B-C; the node B compares the traffic parameter of the LSP before adjustment with the new traffic parameter in the Path message, and calculates a bandwidth increase of 1.25 Gbps. Therefore, one tributary slot needs to be added. Accordingly, the node B selects one new idle tributary slot in the link B-C, for example, a tributary slot numbered 4, and sends a Path message to a node C, where the message carries the tunnel ID, the new LSP ID and the new traffic parameter, and indicates that this message is also an ODUflex lossless bandwidth adjustment message. At the same time, the message further contains a new label, and the label indicates a tributary slot used by the ODUflex in the link B-C after the bandwidth adjustment, for example, labels numbered 1, 2, 3, and 4. In addition, the Path message may also contain both the new label and an old label of the ODUflex before adjustment in the link B-C.
   At the same time, the node B triggers LCR (Link Connection Resizing, link connection resizing) protocol running of its data plane, and adds a newly reserved tributary slot to a link connection between B and C.
(6) A node C receives the Path message, and knows, according to an "ODUflex lossless adjustment indication" in the received message, that ODUflex bandwidth adjustment needs to be performed; and at the same time, creates a control state on a control plane for the LSP after adjustment, and saves control information of the LSP.
   The node C knows, according to a value of the label, a label of a tributary slot that is numbered 1, 2, 3, or 4 and used in the link B-C. Then the node C finds, according to the tunnel ID and on the control plane, control information corresponding to an LSP before adjustment, obtains, from the control information corresponding to the LSP before adjustment, an old label of the LSP before adjustment in the link B-C, and compares the old label with the new label, so as to know the tributary slot newly added in the link B-C. Alternatively, if the Path message received by the node C further contains the old label of the ODUflex before adjustment in the link B-C, the node C directly compares the new label with the old label, so as to know the tributary slot newly added in the link B-C.
(7) On the control plane, the node C saves, to the control information corresponding to the LSP after adjustment, information of the tributary slot used by the ODUflex after the bandwidth adjustment; and at the same time, triggers LCR protocol running of a data plane of the node C, and adds the newly reserved tributary slot to the link connection between B and C.
   A specific process that nodes B and C run LCR on their data planes is the same as the specific process that nodes A and B run LCR on their data planes.
(8) Beginning from the last node C, a Resv message is sent hop by hop to the first node A, where the message indicates that a bandwidth is successfully increased for the ODUflex on the control plane.
   In this embodiment, the node C may send a Resv message to the node B after successfully determining the tributary slot to be added in the link B-C, and it is not required that the Resv message is sent to the node B after its data plane is triggered to run LCR or after the data plane completes LCR. In the same way, after receiving the Resv message sent by the node C, the node B may send a Resv message to the node A after successfully determining the tributary slot to be added in the link B-C.
(9) After the LCR protocol is completed on data planes in all links through which the ODUflex passes, the first node A is automatically triggered to perform the BWR (BandWidth Resizing, bandwidth resizing) protocol, to complete an increase of the rate of the ODUflex.
   The BWR protocol is transported on an OTN data plane through a second overhead byte in the ODU frame. A process that the first node A is automatically triggered to perform the BWR protocol is as follows:
   (a) After receiving the bandwidth adjustment command, before starting the LCR protocol, each node blocks the second overhead byte used by the BWR protocol, that is, ignores information in the overhead byte for transporting BWR, so that the information in the BWR overhead byte cannot be transferred to a next node.
   (b) Between adjacent nodes (for example, between A and B or between B and C), after the LCR protocol is successfully run, the blocking of the BWR overhead byte is stopped, that is, the BWR overhead byte is transferred transparently.
   (c) After all nodes complete LCR, a BWR overhead byte of the first node A may be transferred transparently to the last node C, and the last node C also responds with a BWR overhead byte after reception. After receiving a BWR response message, the first node A adjusts the ODUflex rate in a next ODU multiframe, and after the adjustment succeeds, indicates adjustment success through a BWR overhead. After receiving a BWR success indication, each node of the ODUflex path closes the GMP special mode.
(10) After successfully completing the BWR protocol on the data plane, the first node A notifies its control plane.
(11) The first node A sends a PathTear message to a downstream node hop by hop, for removing, on the control plane, the LSP before bandwidth adjustment, that is, deletes, on the control plane, the control state corresponding to the LSP before adjustment.

It should be noted that, the ODUflex lossless bandwidth adjustment process cannot be nested. That is, for a same ODUflex service, after initiating first ODUflex lossless adjustment, and before completing the adjustment, the first node cannot initiate a next operation of ODUflex lossless bandwidth adjustment. Correspondingly, in the ODUflex lossless adjustment process, on the control plane of each node, at most two control states can be saved for the ODUflex path, one for saving control information of the LSP before adjustment, and the other for saving control information of the LSP after adjustment.

On the data plane, if there is a failure in LCR running, which causes that the node A cannot start the BWR protocol before time expires (that is, in a period of time after starting the ODUflex bandwidth adjustment, the node A does not receive the BWR response message), or if the node A fails after running the BWR protocol, the node A sends the PathTear message to the downstream node node by node, indicates deletion of the control state corresponding to the LSP after adjustment, and performs a rollback operation on the data plane. A node that receives the PathTear message first judges whether LCR between the current node and an upstream node is successfully run previously; if successful, needs to run the LCR protocol again, and deletes a previously added tributary slot from a link connection; if unsuccessful, does not need to perform a rollback operation on a control plane. In addition, each node on the ODUflex path further deletes the control state corresponding to the LSP after adjustment and is created on the control plane previously.

Example 4: What is shown in FIG. 6 is taken as an example, and is a bandwidth decrease procedure.

It is assumed that an ODUflex path with a bandwidth of 5 Gbps exists among nodes A, B and C" its tunnel ID and LSP ID have been allocated, each node saves a control state of an ODUflex before bandwidth adjustment, where the control state of the ODUflex before bandwidth adjustment includes the tunnel ID, the LSP ID and a traffic parameter (used for describing a bandwidth value of the ODUflex) of the ODUflex, and a label value of the ODUflex in each link (used for describing a tributary slot occupied by the ODUflex in each link). If a first node A of the ODUflex receives a command requiring a decrease of a bandwidth of the ODUflex to 3.75 Gbps, a lossless bandwidth adjustment process is relatively similar to the bandwidth increase process in Example 3, where main differences are as follows:
(1) On a control plane, a bandwidth value in a new traffic parameter in a Path message is smaller than an original one, and each node compares new and old bandwidths to know that the bandwidth needs to be decreased. Meanwhile, in a Path message, a tributary slot to be cut is obtained by comparing a new label with an old label, or a new label directly carries a tributary slot to be cut.
(2) On a data plane, a bandwidth decrease process is the opposite of a bandwidth increase process, and requires that a rate of the ODUflex is decreased and then a tributary slot is cut from a link connection. A specific process is:
   After a first node on the ODUflex path receives an ODUflex lossless bandwidth adjustment command, or after each downstream node receives a Path message, the tributary slot that needs to be cut is determined, and on the data plane, LCR is first run to perform link connection resizing initialization, which specifically is: Each node on the ODUflex path blocks a second overhead byte used by the BWR protocol; then, an LCR protocol handshake is performed between each pair of adjacent nodes, and after completing the handshake, two adjacent nodes both change a GMP encapsulation manner into a special mode, and then stop blocking BWR, that is, transparently transfer a BWR overhead byte, while temporarily suspending the LCR protocol.

After LCR of all links through which the ODUflex passes is successfully initialized, BWR is run between the first node A and a last node C, to decrease the rate of the ODUflex, which specifically is: A BWR overhead byte of the first node A may be transparently transferred to the last node C, and the last node C also responds with a BWR overhead byte after reception; after receiving a BWR response message, the first node A adjusts the ODUflex rate in a next ODU multiframe, and after the adjustment succeeds, indicates adjustment success through a BWR overhead to each node on the ODUflex path.

Finally, the LCR protocol is run in each node through which the ODUflex passes, and a previously designated tributary slot is deleted from a corresponding link connection. Specifically, after receiving a BWR success indication, each node of the ODUflex path closes a GMP special mode, and at the same time, each pair of adjacent nodes deletes the designated tributary slot from the link connection of the ODUflex in the next ODU multiframe after the LCR protocol handshake.

If abnormality occurs when the data plane performs LCR or BWR, and causes that the bandwidth adjustment is unsuccessful, a rollback operation needs to be performed, and a state before the bandwidth adjustment is restored, which is specifically as follows:
(a) After receiving a Resv response message, the first node A waits for a result of bandwidth adjustment of a data plane. If the bandwidth adjustment of the data plane of the node A is unsuccessful, an adjustment error is reported to a control plane of the node A.
(b) The node A sends a PathTear message along an LSP direction node by node to a downstream node, to request that an LSP after bandwidth adjustment is deleted on the control plane, that is, a control state of the LSP after bandwidth adjustment is deleted on the control plane.
(c) Each node that receives the message judges whether a previous tributary slot decrease operation is successful; if successful, needs to run the LCR protocol again, and adds a cut tributary slot to a link connection again; if unsuccessful, does not need this rollback operation. At the same time, each node deletes a control state that is of the LSP after bandwidth adjustment and is created on the control plane previously.

### Embodiment 3

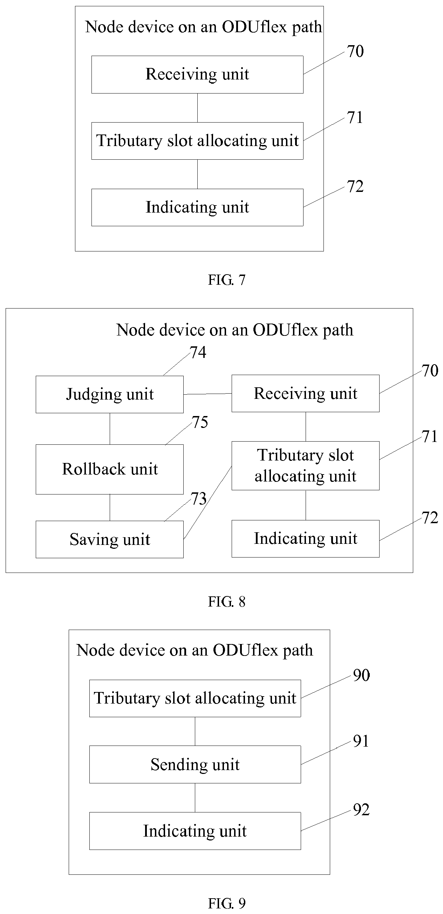

Embodiment 3 of the present invention provides a node device on an ODUflex path. The node device is a downstream node of each link on the ODUflex path. As shown in FIG. 7, the node device includes:
a receiving unit 70, configured to receive a request message from an upstream node on the ODUflex path, where the request message carries a tunnel ID of the ODUflex path and bandwidth information after adjustment, the request message is used for requesting lossless adjustment of a bandwidth of the ODUflex path, and the request message received by the receiving unit 70 contains a new LSP ID allocated by a first node of the ODUflex path for the ODUflex path after adjustment;
a tributary slot allocating unit 71, configured to search according to the tunnel ID to obtain bandwidth information before adjustment of the ODUflex path, compare the bandwidth information before adjustment with the bandwidth information after adjustment, determine the number of tributary slots that need to be adjusted for a link between the node device and an adjacent upstream node, and select a tributary slot that needs to be adjusted; and
an indicating unit 72, configured to indicate, through a label, a tributary slot after adjustment of the adjacent upstream node or the selected tributary slot that needs to be adjusted, and send a tributary slot adjustment command to a data plane, so that the data plane performs tributary slot adjustment and ODUflex bit rate adjustment according to the tributary slot adjustment command.

As shown in FIG. 8, the node device further includes:
a saving unit 73, configured to create a control state for the path after adjustment, save control information, where the saved control information includes the tunnel ID, the bandwidth information after adjustment, and the new LSP ID, and save, to the corresponding control state, information of a tributary slot occupied by the ODUflex path after adjustment.

The receiving unit 70 is further configured to receive a rollback indication message that is sent by the first node of the ODUflex path along the ODUflex path downstream node by node. The node device further includes:
a judging unit 74, configured to: after the receiving unit receives the rollback indication message, judge whether the tributary slot adjustment of the data plane is successful; and
a rollback unit 75, configured to: in a case that the judging unit 74 judges that the tributary slot adjustment is successful, execute a tributary slot adjustment rollback operation, and roll back to a state before the tributary slot adjustment.

The node device described in this embodiment corresponds to a downstream node of each link on an ODUflex path in Embodiment 1. To highlight an inventive point of the node device in this embodiment, some functions of the node device are ignored in this embodiment, for example, functions such as triggering, after the tributary slot adjustment information is determined, a tributary slot adjustment operation and bit rate adjustment performed by the data plane.

The node device described in the embodiment of the present invention can implement automatic ODUflex lossless bandwidth adjustment, and therefore, problems caused by manual bandwidth adjustment, such as a heavy work load and a configuration error, are avoided. Moreover, because an adjustment command does not need to be sent manually node by node during an ODUflex lossless bandwidth adjustment process, a bandwidth adjustment speed is increased, and a bandwidth adjustment requirement of a customer is satisfied rapidly.

Meanwhile, the node device in this embodiment provides a rollback mechanism, where a state before adjustment may be rolled back to in a case of adjustment failure, which effectively increases reliability of ODUflex lossless bandwidth adjustment.

### Embodiment 4

This embodiment provides a node device on an ODUflex path. The node device is an upstream node of each link on the ODUflex path. As shown in FIG. 9, the node device includes:
a tributary slot allocating unit 90, configured to: in a case that the current node is not a last node of the ODUflex path, compare bandwidth information after adjustment of the ODUflex path with bandwidth information before adjustment, determine the number of tributary slots that need to be adjusted for a link between the current node and an adjacent next node, and determine tributary slot adjustment information according to the number of tributary slots that need to be adjusted, where the tributary slot adjustment information includes: a tributary slot after adjustment or a selected tributary slot that needs to be adjusted;
a sending unit 91, configured to send a request message to a downstream node, where the request message carries a tunnel identifier tunnel ID of the ODUflex path, the bandwidth information after adjustment and a label that contains the tributary slot adjustment information determined by the current node, and the request message is used for requesting lossless adjustment of a bandwidth of the ODUflex path; and
an indicating unit 92, configured to send a first tributary slot adjustment command to a data plane according to the tributary slot adjustment information, so that the data plane adjusts a tributary slot of a link connection between the current node and the adjacent next node according to the first tributary slot adjustment command.

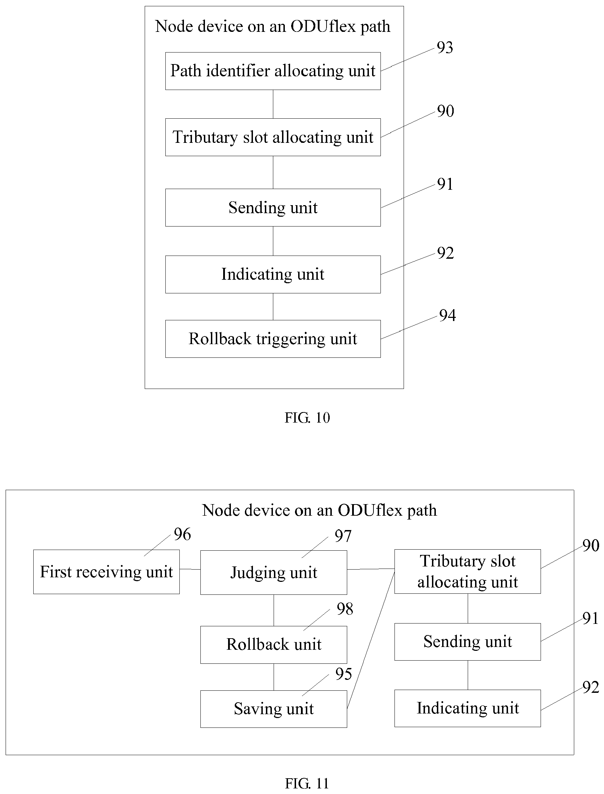

As shown in FIG. 10, when the node device is a first node of the ODUflex path, the node device further includes:
a path identifier allocating unit 93, configured to allocate one new label switching path identifier LSP ID to the ODUflex path after adjustment, and carry the new LSP ID in the request message sent to the downstream node;
and may further include:
   a rollback triggering unit 94, configured to send a rollback indication message to the downstream node after a tributary slot adjustment failure indication or an ODUflex bit rate adjustment failure indication sent by the data plane is received.

As shown in FIG. 11, the node device further includes:
a saving unit 95, configured to create a control state for the path after adjustment, save control information, where the saved control information includes the tunnel ID, the bandwidth information after adjustment, and the new LSP ID, and save, to the corresponding control state, information of a tributary slot occupied by the ODUflex path after adjustment;
and may further include:
   a first receiving unit 96, configured to receive a rollback indication message that is sent by the first node of the ODUflex path along the ODUflex path downstream node by node;
   a judging unit 97, configured to: after the receiving unit receives the rollback indication message, judge whether the tributary slot adjustment of the data plane is successful; and
   a rollback unit 98, configured to: in a case that the judging unit judges that the tributary slot adjustment is successful, execute a tributary slot adjustment rollback operation, and roll back to a state before the tributary slot adjustment.

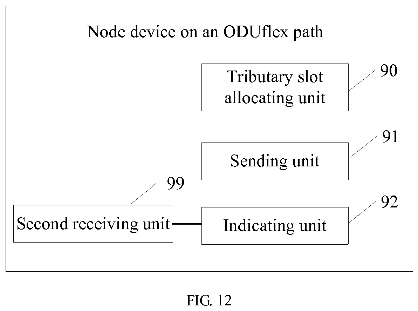

As shown in FIG. 12, the node device further includes:
a second receiving unit 99, configured to: in a case that the current node is not a first node, receive a request message sent by an upstream node of the current node, where the request message carries the tunnel identifier tunnel ID of the ODUflex path, the bandwidth information after adjustment and a label that contains tributary slot adjustment information determined by the upstream node, and the request message is used for requesting the lossless adjustment of the bandwidth of the ODUflex path; and
the indicating unit 92, further configured to send a second tributary slot adjustment command to the data plane according to the tributary slot adjustment information in the request message received by the second receiving unit, so that the data plane adjusts a tributary slot of a link connection between the upstream node and the current node according to the second tributary slot adjustment command.

The node device described in this embodiment corresponds to an upstream node of each link on an ODUflex path in Embodiment 2. To highlight an inventive point of the node device in this embodiment, some functions of the node device are ignored in this embodiment.

The node device described in the embodiment of the present invention can implement automatic ODUflex lossless bandwidth adjustment, and therefore, problems caused by manual bandwidth adjustment, such as a heavy work load and a configuration error, are avoided. Moreover, because an adjustment command does not need to be sent manually node by node during an ODUflex lossless bandwidth adjustment process, a bandwidth adjustment speed is increased, and a bandwidth adjustment requirement of a customer is satisfied rapidly.

Meanwhile, the node device in this embodiment provides a rollback mechanism, where a state before adjustment may be rolled back to in a case of adjustment failure, which effectively increases reliability of ODUflex lossless bandwidth adjustment.

### Embodiment 5

This embodiment provides a lossless bandwidth adjustment system, including a first node of an ODUflex path and a last node of the ODUflex path, and may further include an intermediate node.

The first node is configured to send a request message along the ODUflex path downstream node by node to the last node, where the request message carries a tunnel identifier tunnel ID of the ODUflex path and bandwidth information after adjustment, and the request message is used for requesting lossless adjustment of a bandwidth of the ODUflex path.

The last node is configured to receive the request message, search according to the tunnel identifier to obtain bandwidth information before adjustment of the ODUflex path, compare the bandwidth information before adjustment with the bandwidth information after adjustment, determine the number of tributary slots that need to be adjusted for a link between the last node and an adjacent upstream node, select a tributary slot that needs to be adjusted, indicate, through a first label, a tributary slot after adjustment of the upstream node or the selected tributary slot that needs to be adjusted, and send a tributary slot adjustment command to a data plane, so that the data plane performs tributary slot adjustment and ODUflex bit rate adjustment according to the tributary slot adjustment command, where the adjacent upstream node is the first node or an intermediate node between the first node and the last node.

The upstream node is configured to receive the first label, obtain the tributary slot that needs to be adjusted, and send a first tributary slot adjustment command to the data plane, so that, according to the first tributary slot adjustment command, the data plane adjusts a tributary slot of a link connection between the upstream node and the last node and performs ODUflex bit rate adjustment.

If the tributary slot adjustment command is a tributary slot increase command, the first node and the last node are further configured to perform the ODUflex bit rate adjustment after tributary slot adjustment of all link connections on the ODUflex path is completed.

If the tributary slot adjustment command is a tributary slot decrease command, a node on the ODUflex path is further configured to perform tributary slot adjustment of a link connection after the first node and the last node complete the ODUflex bit rate adjustment.

If the adjacent upstream node is the intermediate node between the first node and the last node, the upstream node is further configured to receive the request message, search according to the tunnel identifier to obtain the bandwidth information before adjustment of the ODUflex path, compare the bandwidth information before adjustment with the bandwidth information after adjustment, determine the number of tributary slots that need to be adjusted for a link between the upstream node and a previous node adjacent to the upstream node, select a tributary slot that needs to be adjusted, indicate, through a second label, a tributary slot after adjustment of the previous node adjacent to the upstream node or the selected tributary slot that needs to be adjusted, and send a second tributary slot adjustment command to the data plane, so that the data plane adjusts a tributary slot of a link connection between the upstream node and the previous node and performs the ODUflex bit rate adjustment according to the second tributary slot adjustment command.

The previous node adjacent to the upstream node is the first node or the intermediate node between the first node and the last node.

### Embodiment 6

This embodiment provides a lossless bandwidth adjustment system, including a first node of an ODUflex path and a downstream node of the ODUflex path, where the downstream node is a last node of the ODUflex path or an intermediate node between the first node and the last node.

The first node is configured to send a request message to an adjacent downstream node along the ODUflex path, where the request message carries a tunnel identifier tunnel ID of the ODUflex path, bandwidth information after adjustment and a label that contains tributary slot adjustment information determined by the first node, and the request message is used for requesting lossless adjustment of a bandwidth of the ODUflex path, and the tributary slot adjustment information includes a tributary slot after adjustment or a tributary slot that needs to be adjusted and is selected by the first node; the first node is further configured to allocate one new label switching path identifier LSP ID to the ODUflex path after bandwidth adjustment, and carry the new LSP ID in the request message sent to the downstream node. The first node is further configured to send a rollback indication message to the downstream node after a tributary slot adjustment failure indication or an ODUflex bit rate adjustment failure indication sent by the data plane is received.

The downstream node is configured to send a first tributary slot adjustment command to a data plane according to the tributary slot adjustment information, and in a case that the current node is not the last node of the ODUflex path, search according to the tunnel identifier to obtain bandwidth information before adjustment of the ODUflex path, compare the bandwidth information after adjustment with the bandwidth information before adjustment, determine the number of tributary slots that need to be adjusted for a link between the downstream node and a next node adjacent to this downstream node, determine tributary slot adjustment information according to the number of tributary slots that need to be adjusted, and continue to send, to the next node, a request message that carries the tunnel identifier tunnel ID of the ODUflex path, the bandwidth information after adjustment and a label that contains the tributary slot adjustment information determined by the downstream node.

The downstream node sends a second tributary slot adjustment command to the data plane. The data plane performs tributary slot adjustment and ODUflex bit rate adjustment according to the first tributary slot adjustment command and the second tributary slot adjustment command, where the data plane adjusts a tributary slot of a link connection between the first node and the downstream node according to the first tributary slot adjustment command, and adjusts a tributary slot of a link connection between the downstream node and the adjacent next node according to the second tributary slot adjustment command.

In conclusion, the ODUflex lossless bandwidth adjustment solution described in the embodiment implements automatic ODUflex lossless bandwidth adjustment without the need of manual participation, and therefore, problems caused by manual bandwidth adjustment, such as a heavy work load and a configuration error, are avoided. Moreover, because an adjustment command does not need to be sent manually node by node during an ODUflex lossless bandwidth adjustment process, a bandwidth adjustment speed is increased, and a bandwidth adjustment requirement of a customer is satisfied rapidly.

Meanwhile, the node device in this embodiment provides a rollback mechanism, where a state before adjustment may be rolled back to in a case of adjustment failure, which effectively increases reliability of ODUflex lossless bandwidth adjustment.

Persons of ordinary skill in the art may understand that, all or part of steps in the methods in the foregoing embodiments may be completed by a program instructing relevant hardware. The program may be stored in a computer readable storage medium, such as a read only memory (ROM for short), a random access memory (RAM for short), a magnetic disk and an optical disk.

The foregoing descriptions are merely specific exemplary embodiments of the present invention, but are not intended to limit the protection scope of the present invention. Any variation or replacement made by persons skilled in the art within the technical scope disclosed in the present invention shall fall within the protection scope of the present invention. Therefore, the protection scope of the present invention shall be subject to the appended claims.

## Claims

1. A lossless bandwidth adjustment method for an Optical Transport Network, comprising:
Receiving(10), by a downstream node of a bandwidth-variable optical channel data unit ODUflex path, a request message from an upstream node of the ODUflex path, wherein the request message carries a tunnel identifier, tunnel ID, of the ODUflex path, bandwidth information after adjustment and a new label switching path identifier, LSP ID, the request message is used for requesting lossless adjustment of a bandwidth of the ODUflex path, and the request message is sent by a first node of the ODUflex path along the ODUflex path downstream node by node to a last node;
Saving, by the downstream node, control information of an LSP after adjustment, wherein the control information comprises the tunnel ID, the bandwidth information after adjustment and the new LSP ID;
Seaching(11), by the downstream node, according to the tunnel identifier to obtain bandwidth information before adjustment of the ODUflex path, comparing the bandwidth information before adjustment with the bandwidth information after adjustment, determining the number of tributary slots that need to be adjusted for a link between the downstream node and an adjacent upstream node, and selecting a tributary slot that needs to be adjusted; and
Indicating(12), by the downstream node and through a label, a tributary slot after adjustment of the adjacent upstream node or the selected tributary slot that needs to be adjusted, and sending a tributary slot adjustment command to a data plane, so that the data plane performs tributary slot adjustment and ODUflex bit rate adjustment according to the tributary slot adjustment command.

2. The method according to claim 1, wherein the indicating, by the downstream node and through the label, the tributary slot after adjustment of the adjacent upstream node or the selected tributary slot that needs to be adjusted comprises:
sending, to the upstream node, a response message, which carries an old label and a new label, wherein the new label contains a tributary slot that is occupied by the ODUflex path after adjustment in a link between the upstream node and the downstream node, and the old label contains a tributary slot that is occupied by the ODUflex path before adjustment in the link between the upstream node and the downstream node; or
sending, to the upstream node, a response message, which carries a new label, wherein the new label contains a tributary slot that is occupied by the ODUflex path after adjustment in a link between the upstream node and the downstream node; or
sending a response message upstream, which carries a new label, wherein the new label contains the selected tributary slot that needs to be adjusted, and indicates whether this tributary slot adjustment is an increase of the number of tributary slots or a decrease of the number of tributary slots.

3. The method according to claim 2, wherein
if the response message, which carries the old label and the new label, is sent to the upstream node, wherein the new label contains the tributary slot that is occupied by the ODUflex path after adjustment in the link between the upstream node and the downstream node, and the old label contains a tributary slot that is occupied by the ODUflex path before adjustment in the link between the upstream node and the downstream node, the method further comprises: comparing, by the upstream node, the new label with the old label to know the tributary slot that needs to be adjusted; or
if the downstream node sends, to the upstream node, the response message, which carries the new label, wherein the new label contains the tributary slot that is occupied by the ODUflex path after adjustment in the link between the upstream node and the downstream node, the method further comprises: searching by the upstream node according to the tunnel identifier in the request message to obtain an old label of the ODUflex path, wherein the old label contains a tributary slot that is occupied by the ODUflex path before adjustment in the link between the upstream node and the downstream node; and comparing the new label with the old label to know the tributary slot that needs to be adjusted.

4. The method according to claim 1, wherein the sending the tributary slot adjustment command to the data plane, so that the data plane performs the tributary slot adjustment and ODUflex bit rate adjustment according to the tributary slot adjustment command comprises:
if the tributary slot adjustment command is a tributary slot increase command, performing, by the data plane, the ODUflex bit rate adjustment after tributary slot adjustment of all link connections on the ODUflex path is completed; and
if the tributary slot adjustment command is a tributary slot decrease command, performing, by the data plane, tributary slot adjustment of a link connection on the ODUflex path after completing the ODUflex bit rate adjustment.

5. The method according to claim 1, wherein if a tributary slot adjustment failure indication or an ODUflex bit rate adjustment failure indication sent by the data plane is received, the method further comprises:
sending, by the first node of the ODUflex path, a rollback indication message along the ODUflex path downstream node by node; and
after receiving the rollback indication message, judging, by each node on the ODUflex path, whether the tributary slot adjustment of the data plane is successful previously, and if successful, executing a tributary slot adjustment rollback operation, and rolling back to a state before the tributary slot adjustment.

6. A lossless bandwidth adjustment method for an Optical Transport Network, comprising:
Receiving(40), by a downstream node of a bandwidth-variable optical channel data unit ODUflex path, a request message from an upstream node, wherein the request message carries a tunnel identifier tunnel ID, tunnel ID, of the ODUflex path, a new label switching path identifier, LSP ID, bandwidth information after adjustment and a label that contains tributary slot adjustment information determined by the upstream node, the request message is used for requesting lossless adjustment of a bandwidth of the ODUflex path, and the tributary slot adjustment information comprises a tributary slot after adjustment or a tributary slot that needs to be adjusted and is selected by the upstream node;
Saving, by the downstream node, control information of an LSP after adjustment, wherein the control information of the LSP comprises the tunnel ID, the new LSP ID, the bandwidth information after adjustment and the label that contains tributary slot adjustment information determined by the upstream node;
Sending(41), by the downstream node, a first tributary slot adjustment command to a data plane according to the tributary slot adjustment information, and in a case that the current node is not a last node of the ODUflex path, searching according to the tunnel identifier to obtain bandwidth information before adjustment of the ODUflex path, comparing the bandwidth information after adjustment with the bandwidth information before adjustment, determine the number of tributary slots that need to be adjusted for a link between the downstream node and a next node adjacent to this downstream node, determining tributary slot adjustment information according to the number of tributary slots that need to be adjusted, and continuing to send, to the next node, a request message that carries the tunnel ID of the ODUflex path, the new LSP ID, the bandwidth information after adjustment and a label that contains the tributary slot adjustment information determined by the downstream node;
Sending(42), by the downstream node, a second tributary slot adjustment command to the data plane; and
performing, by the data plane, tributary slot adjustment and ODUflex bit rate adjustment according to the first tributary slot adjustment command and the second tributary slot adjustment command, wherein the data plane adjusts a tributary slot of a link connection between the upstream node and the downstream node according to the first tributary slot adjustment command, and adjusts a tributary slot of a link connection between the downstream node and the adjacent next node according to the second tributary slot adjustment command.

7. The method according to claim 6, wherein the performing, by the data plane, the tributary slot adjustment and ODUflex bit rate adjustment according to the first tributary slot adjustment command and the second tributary slot adjustment command comprises:
if the first tributary slot adjustment command and the second tributary slot adjustment command are tributary slot increase commands, performing, by the data plane, the ODUflex bit rate adjustment after tributary slot adjustment of all link connections on the ODUflex path is completed; and
if the first tributary slot adjustment command and the second tributary slot adjustment command are tributary slot decrease commands, performing, by the data plane, tributary slot adjustment of a link connection on the ODUflex path after completing the ODUflex bit rate adjustment.

8. A node device on an ODUflex path, comprising:
a receiving unit(70), configured to receive a request message from an upstream node of the ODUflex path, wherein the request message carries a tunnel identifier, tunnel ID, of the ODUflex path, bandwidth information after adjustment and a new label switching path identifier, LSP ID, and the request message is used for requesting lossless adjustment of a bandwidth of the ODUflex path;
a saving unit (73), configured to save control information of an LSP after adjustment, wherein the control information comprises the tunnel ID, the bandwidth information after adjustment and the new LSP ID;
a tributary slot allocating unit(71), configured to search according to the tunnel identifier to obtain bandwidth information before adjustment of the ODUflex path, compare the bandwidth information before adjustment with the bandwidth information after adjustment, determine the number of tributary slots that need to be adjusted for a link between the node device and an adjacent upstream node, and select a tributary slot that needs to be adjusted; and
an indicating unit(72), configured to indicate, through a label, a tributary slot after adjustment of the adjacent upstream node or the selected tributary slot that needs to be adjusted, and send a tributary slot adjustment command to a data plane, so that the data plane performs tributary slot adjustment and ODUflex bit rate adjustment according to the tributary slot adjustment command.

9. The node device according to claim 8, wherein the request message received by the receiving unit contains a new label switching path identifier LSP ID allocated by a first node of the ODUflex path to the ODUflex path after adjustment.

10. The node device according to claim 8, wherein the receiving unit is further configured to receive a rollback indication message that is sent by the first node of the ODUflex. path along the ODUflex path downstream node by node, and the node device further comprises:
a judging unit(74), configured to: after the receiving unit receives the rollback indication message, judge whether the tributary slot adjustment of the data plane is successful; and
a rollback unit(75), configured to: in a case that the judging unit judges that the tributary slot adjustment is successful, execute a tributary slot adjustment rollback operation, and roll back to a state before the tributary slot adjustment.

11. A node device on an ODUflex path, comprising:
a second receiving unit (99), configured to receive a request message sent by an upstream node, wherein the request message carries a tunnel identifier tunnel ID, tunnel ID, of the ODUflex path, a new label switching path identifier, LSP ID, bandwidth information after adjustment and a label that contains tributary slot adjustment information determined by the upstream node, the request message is used for requesting lossless adjustment of a bandwidth of the ODUflex path, and the tributary slot adjustment information comprises a tributary slot after adjustment or a tributary slot that needs to be adjusted and is selected by the upstream node;
a saving unit (95), configured to save control information, wherein the control information comprises the tunnel ID, the new LSP ID, the bandwidth information after adjustment and the label that contains tributary slot adjustment information determined by the upstream node;
a tributary slot allocating unit(90), configured to: in a case that a current node is not a last node of the ODUflex path, compare bandwidth information after adjustment of the ODUflex path with bandwidth information before adjustment, determine the number of tributary slots that need to be adjusted for a link between the current node and an adjacent next node, and determine tributary slot adjustment information according to the number of tributary slots that need to be adjusted, wherein the tributary slot adjustment information comprises: a tributary slot after adjustment or a selected tributary slot that needs to be adjusted;
a sending unit(91), configured to send a request message to a downstream node, wherein the request message carries the tunnel ID of the ODUflex path, the new LSP ID, the bandwidth information after adjustment and a label that contains the tributary slot adjustment information determined by the current node, the request message is used for requesting lossless adjustment of a bandwidth of the ODUflex path; and
an indicating unit(92), configured to send a first tributary slot adjustment command to a data plane according to the tributary slot adjustment information determined by the current node, so that the data plane adjusts a tributary slot of a link connection between the current node and the adjacent next node according to the first tributary slot adjustment command,further configured to send a second tributary slot adjustment command to the data plane according to the tributary slot adjustment information in the request message received by the second receiving unit, so that the data plane adjusts a tributary slot of a link connection between the upstream node and the current node according to the second tributary slot adjustment command.

12. The node device according to claim 11, wherein when the node device is a first node of the ODUflex path, the node device further comprises:
a path identifier allocating unit(93), configured to allocate one new label switching path identifier LSP ID to the ODUflex path after adjustment, and carry the new LSP ID in the request message sent to the downstream node.

13. The node device according to claim 12, further comprising:
a rollback triggering unit(94), configured to send a rollback indication message to the downstream node after a tributary slot adjustment failure indication or an ODUflex bit rate adjustment failure indication sent by the data plane is received.

14. The node device according to claim 11, further comprising:
a first receiving unit(96), configured to receive a rollback indication message that is sent by a first node of the ODUflex path along the ODUflex path downstream node by node;
a judging unit(97), configured to: after the receiving unit receives the rollback indication message, judge whether the tributary slot adjustment of the data plane is successful; and
a rollback unit(98), configured to: in a case that the judging unit judges that the tributary slot adjustment is successful, execute a tributary slot adjustment rollback operation, and roll back to a state before the tributary slot adjustment.

15. The node device according to claim 11, further comprising:
a second receiving unit(99), configured to: in a case that the current node is not a first node, receive a request message sent by an upstream node of the current node, wherein the request message carries the tunnel identifier tunnel ID of the ODUflex path, the bandwidth information after adjustment and a label that contains tributary slot adjustment information determined by the upstream node, and the request message is used for requesting the lossless adjustment of the bandwidth of the ODUflex path; and
the indicating unit(92), further configured to send a second tributary slot adjustment command to the data plane according to the tributary slot adjustment information in the request message received by the second receiving unit, so that the data plane adjusts a tributary slot of a link connection between the upstream node and the current node according to the second tributary slot adjustment command.

## Patentansprüche

1. Verlustloses Bandbreiteneinstellverfahren für ein Optisches Transportnetz, das die folgenden Schritte umfasst:
Empfangen (10), durch einen Downstream-Knoten eines bandbreitenvariablen Optikkanaldateneinheit-ODUflex-Pfads, einer Anforderungsnachricht von einem Upstream-Knoten des ODUflex-Pfads, wobei die Anforderungsnachricht eine Tunnelkennung, Tunnel-ID, des ODUflex-Pfads, Bandbreiteninformationen nach Einstellung und eine neue Kennzeichnungsumschaltpfadkennung bzw. Label-Switching-Pfad-Kennung, LSP ID, führt, wobei die Anforderungsnachricht verwendet wird zum Anfordern verlustloser Einstellung einer Bandbreite des ODUflex-Pfads und die Anforderungsnachricht von einem ersten Knoten des ODUflex-Pfads Knoten für Knoten downstream entlang dem ODUflex-Pfad zu einem letzten Knoten gesendet wird;
Sichern, durch den Downstream-Knoten, von Steuerinformationen eines LSP nach der Einstellung, wobei die Steuerinformationen die Tunnel-ID, die Bandbreiteninformationen nach der Einstellung und die neue LSP ID umfassen;
Suchen (11), durch den Downstream-Knoten, gemäß der Tunnelkennung, um Bandbreiteninformationen vor der Einstellung des ODUflex-Pfads zu erhalten, Vergleichen der Bandbreiteninformationen vor der Einstellung mit den Bandbreiteninformationen nach der Einstellung, Bestimmen der Anzahl von Zubringerschlitzen, die für einen Link zwischen dem Downstream-Knoten und einem angrenzenden Upstream-Knoten eingestellt werden müssen, und Auswählen eines Zubringerschlitzes, der eingestellt werden soll; und
Anzeigen (12), durch den Downstream-Knoten und durch eine Kennzeichnung, eines Zubringerschlitzes nach der Einstellung des angrenzenden Upstream-Knotens oder des ausgewählten Zubringerschlitzes, der eingestellt werden soll, und Senden eines Zubringerschlitzeinstellbefehls an eine Datenebene, so dass die Datenebene eine Zubringerschlitzeinstellung und ODUflex-Bitrateneinstellung gemäß dem Zubringerschlitzeinstellbefehl durchführt.

2. Verfahren nach Anspruch 1, wobei das Anzeigen, durch den Downstream-Knoten und durch die Kennzeichnung, des Zubringerschlitzes nach der Einstellung des angrenzenden Upstream-Knotens oder des ausgewählten Zubringerschlitzes, der eingestellt werden soll, die folgenden Schritte umfasst:
Senden, an den Upstream-Knoten, einer Antwortnachricht, die eine alte Kennzeichnung und eine neue Kennzeichnung führt, wobei die neue Kennzeichnung einen Zubringerschlitz enthält, der von dem ODUflex-Pfad nach der Einstellung in einem Link zwischen dem Upstream-Knoten und dem Downstream-Knoten belegt wird, und die alte Kennzeichnung einen Zubringerschlitz enthält, der von dem ODUflex-Pfad vor der Einstellung in dem Link zwischen dem Upstream-Knoten und dem Downstream-Knoten belegt wird; oder
Senden, an den Upstream-Knoten, einer Antwortnachricht, die eine neue Kennzeichnung führt, wobei die neue Kennzeichnung einen Zubringerschlitz enthält, der von dem ODUflex-Pfad nach der Einstellung in einem Link zwischen dem Upstream-Knoten und dem Downstream-Knoten belegt wird; oder
Senden einer Antwortnachricht upstream, die eine neue Kennzeichnung führt, wobei die neue Kennzeichnung den ausgewählten Zubringerschlitz enthält, der eingestellt werden soll, und anzeigt, ob diese Zubringerschlitzeinstellung eine Erhöhung der Anzahl der Zubringerschlitze oder eine Verringerung der Anzahl der Zubringerschlitze ist.

3. Verfahren nach Anspruch 2, wobei,
wenn die Antwortnachricht, die die alte Kennzeichnung und die neue Kennzeichnung führt, an den Upstream-Knoten gesendet wird, wobei die neue Kennzeichnung den Zubringerschlitz enthält, der von dem ODUflex-Pfad nach der Einstellung in dem Link zwischen dem Upstream-Knoten und dem Downstream-Knoten belegt wird, und die alte Kennzeichnung einen Zubringerschlitz enthält, der von dem ODUflex-Pfad vor der Einstellung in dem Link zwischen dem Upstream-Knoten und dem Downstream-Knoten belegt wird, das Verfahren ferner den folgenden Schritt umfasst: Vergleichen, durch den Upstream-Knoten, der neuen Kennzeichnung mit der alten Kennzeichnung, um den Zubringerschlitz zu erkennen, der eingestellt werden soll; oder
wenn der Downstream-Knoten die Antwortnachricht, die die neue Kennzeichnung führt, an den Upstream-Knoten sendet, wobei die neue Kennzeichnung den Zubringerschlitz enthält, der von dem ODUflex-Pfad nach der Einstellung in dem Link zwischen dem Upstream-Knoten und dem Downstream-Knoten belegt wird, das Verfahren ferner die folgenden Schritte umfasst: Suchen, durch den Upstream-Knoten, gemäß der Tunnelkennung in der Antwortnachricht, um eine alte Kennzeichnung des ODUflex-Pfads zu erhalten, wobei die alte Kennzeichnung einen Zubringerschlitz enthält, der von dem ODUflex-Pfad vor der Einstellung in dem Link zwischen dem Upstream-Knoten und dem Downstream-Knoten belegt wird, und Vergleichen der neuen Kennzeichnung mit der alten Kennzeichnung, um den Zubringerschlitz, der eingestellt werden soll, zu erkennen.

4. Verfahren nach Anspruch 1, wobei das Senden des Zubringerschlitzeinstellbefehls an die Datenebene, so dass die Datenebene die Zubringerschlitzeinstellung und ODUflex-Bitrateneinstellung gemäß dem Zubringerschlitzeinstellbefehl durchführt, die folgenden Schritte umfasst:
wenn der Zubringerschlitzeinstellbefehl ein Zubringerschlitzerhöhungsbefehl ist, Durchführen, durch die Datenebene, der ODUflex-Bitrateneinstellung, nachdem die Zubringerschlitzeinstellung aller Linkverbindungen auf dem ODUflex-Pfad abgeschlossen ist; und
wenn der Zubringerschlitzeinstellbefehl ein Zubringerschlitzverringerungsbefehl ist, Durchführen, durch die Datenebene, der Zubringerschlitzeinstellung einer Linkverbindung auf dem ODUflex-Pfad, nachdem die ODUflex-Bitrateneinstellung abgeschlossen ist.

5. Verfahren nach Anspruch 1, wobei, wenn eine von der Datenebene gesendete Zubringerschlitzeinstellungsfehlschlaganzeige oder ODUflex-Bitrateneinstellungsfehlschlaganzeige empfangen wird, das Verfahren ferner die folgenden Schritte umfasst:
Senden, durch den ersten Knoten des ODUflex-Pfads, einer Rückgängigmachenanzeigenachricht Knoten für Knoten downstream entlang dem ODUflex-Pfad; und
nach dem Empfangen der Rückgängigmachenanzeigenachricht, Beurteilen, durch jeden Knoten auf dem ODUflex-Pfad, ob die Zubringerschlitzeinstellung der Datenebene zuvor erfolgreich war; und, falls sie erfolgreich war, Ausführen einer Zubringerschlitzeinstellungs-Rückgängigmachenoperation und Zurückgehen zu einem Zustand vor der Zubringerschlitzeinstellung.

6. Verlustloses Bandbreiteneinstellverfahren für ein Optisches Transportnetz, das die folgenden Schritte umfasst:
Empfangen (40), durch einen Downstream-Knoten eines bandbreitenvariablen Optikkanaldateneinheit-ODUflex-Pfads, einer Anforderungsnachricht von einem Upstream-Knoten, wobei die Anforderungsnachricht eine Tunnelkennung, Tunnel-ID, des ODUflex-Pfads, eine neue Kennzeichnungsumschaltpfadkennung bzw. Label-Switching-Pfad-Kennung, LSP ID, Bandbreiteninformationen nach Einstellung und eine Kennzeichnung, die Zubringerschlitzeinstellungsinformationen, die von dem Upstream-Knoten bestimmt wurden, führt, wobei die Anforderungsnachricht verwendet wird zum Anfordern verlustloser Einstellung einer Bandbreite des ODUflex-Pfads und die Zubringerschlitzeinstellungsinformationen einen Zubringerschlitz nach Einstellung oder einen Zubringerschlitz, der eingestellt werden soll und von dem Upstream-Knoten ausgewählt wurde, umfasst;
Sichern, durch den Downstream-Knoten, von Steuerinformationen eines LSP nach der Einstellung, wobei die Steuerinformationen des LSP die Tunnel-ID, die neue LSP ID, die Bandbreiteninformationen nach Einstellung und die Kennzeichnung, die die von dem Upstream-Knoten bestimmten Zubringerschlitzeinstellungsinformationen enthält, umfassen;
Senden (41), durch den Downstream-Knoten, eines ersten Zubringerschlitzeinstellbefehls an eine Datenebene gemäß den Zubringerschlitzeinstellungsinformationen und, in einem Fall, dass der aktuelle Knoten kein letzter Knoten des ODUflex-Pfads ist, Suchen gemäß der Tunnelkennung, um Bandbreiteninformationen vor der Einstellung des ODUflex-Pfads zu erhalten, Vergleichen der Bandbreiteninformationen nach der Einstellung mit den Bandbreiteninformationen vor der Einstellung, Bestimmen der Anzahl von Zubringerschlitzen, die für einen Link zwischen dem Downstream-Knoten und einem nächsten Knoten, der an diesen Downstream-Knoten angrenzt, eingestellt werden müssen, Bestimmen von Zubringerschlitzeinstellungsinformationen gemäß der Anzahl von Zubringerschlitzen, die eingestellt werden sollen, und Weitersenden, zum nächsten Knoten, einer Anforderungsnachricht, die die Tunnel-ID des ODUflex-Pfads, die neue LSP ID, die Bandbreiteninformationen nach Einstellung und eine Kennzeichnung, die die von dem Downstream-Knoten bestimmten Zubringerschlitzeinstellungsinformationen trägt, umfasst;
Senden (42), durch den Downstream-Knoten, eines zweiten Zubringerschlitzeinstellbefehls an die Datenebene; und
Durchführen, durch die Datenebene, einer Zubringerschlitzeinstellung und ODUflex-Bitrateneinstellung gemäß dem ersten Zubringerschlitzeinstellbefehl und dem zweiten Zubringerschlitzeinstellbefehl, wobei die Datenebene einen Zubringerschlitz einer Linkverbindung zwischen dem Upstream-Knoten und dem Downstream-Knoten gemäß dem ersten Zubringerschlitzeinstellbefehl einstellt und einen Zubringerschlitz einer Linkverbindung zwischen dem Downstream-Knoten und dem angrenzenden nächsten Knoten gemäß dem zweiten Zubringerschlitzeinstellbefehl einstellt.

7. Verfahren nach Anspruch 6, wobei das Durchführen, durch die Datenebene, der Zubringerschlitzeinstellung und der ODUflex-Bitrateneinstellung gemäß dem ersten Zubringerschlitzeinstellbefehl und dem zweiten Zubringerschlitzeinstellbefehl die folgenden Schritte umfasst:
wenn der erste Zubringerschlitzeinstellbefehl und der zweite Zubringerschlitzeinstellbefehl Zubringerschlitzerhöhungsbefehle sind, Durchführen, durch die Datenebene, der ODUflex-Bitrateneinstellung, nachdem die Zubringerschlitzeinstellung aller Linkverbindungen auf dem ODUflex-Pfad abgeschlossen ist; und
wenn der erste Zubringerschlitzeinstellbefehl und der zweite Zubringerschlitzeinstellbefehl Zubringerschlitzverringerungsbefehle sind, Durchführen, durch die Datenebene, der Zubringerschlitzeinstellung einer Linkverbindung auf dem ODUflex-Pfad, nachdem die ODUflex-Bitrateneinstellung abgeschlossen ist.

8. Knotenvorrichtung auf einem ODUflex-Pfad, die Folgendes umfasst:
eine Empfangseinheit (70), die ausgelegt ist zum Empfangen einer Anforderungsnachricht von einem Upstream-Knoten des ODUflex-Pfads, wobei die Anforderungsnachricht eine Tunnelkennung, Tunnel-ID, des ODUflex-Pfads, Bandbreiteninformationen nach Einstellung und eine neue Kennzeichnungsumschaltpfadkennung bzw. Label-Switching-Pfad-Kennung, LSP ID, führt, und die Anforderungsnachricht verwendet wird zum Anfordern verlustloser Einstellung einer Bandbreite des ODUflex-Pfads;
eine Sicherungseinheit (73), die ausgelegt ist zum Sichern von Steuerinformationen eines LSP nach der Einstellung, wobei die Steuerinformationen die Tunnel-ID, die Bandbreiteninformationen nach der Einstellung und die neue LSP ID umfassen;
eine Zubringerschlitzzuweisungseinheit (71), die ausgelegt ist zum Suchen gemäß der Tunnelkennung, um Bandbreiteninformationen vor der Einstellung des ODUflex-Pfads zu erhalten, Vergleichen der Bandbreiteninformationen vor der Einstellung mit den Bandbreiteninformationen nach der Einstellung, Bestimmen der Anzahl von Zubringerschlitzen, die für einen Link zwischen der Knotenvorrichtung und einem angrenzenden Upstream-Knoten eingestellt werden müssen, und Auswählen eines Zubringerschlitzes, der eingestellt werden soll; und
eine Anzeigeeinheit (72), die ausgelegt ist zum Anzeigen, durch eine Kennzeichnung, eines Zubringerschlitzes nach der Einstellung des angrenzenden Upstream-Knotens oder des ausgewählten Zubringerschlitzes, der eingestellt werden soll, und Senden eines Zubringerschlitzeinstellbefehls an eine Datenebene, so dass die Datenebene eine Zubringerschlitzeinstellung und ODUflex-Bitrateneinstellung gemäß dem Zubringerschlitzeinstellbefehl durchführt.

9. Knotenvorrichtung nach Anspruch 8, wobei die durch die Empfangseinheit empfangene Anforderungsnachricht eine neue Kennzeichnungsumschaltpfadkennung bzw. Label-Switching-Pfad-Kennung, LSP ID, enthält, die dem ODUflex-Pfad nach der Einstellung durch einen ersten Knoten des ODUflex-Pfads zugewiesen wird.

10. Knotenvorrichtung nach Anspruch 8, wobei die Empfangseinheit ferner ausgelegt ist zum Empfangen einer Rückgängigmachenanzeigenachricht, die Knoten für Knoten downstream entlang dem ODUflex-Pfad durch den ersten Knoten des ODUflex-Pfads gesendet wird, und die Knotenvorrichtung ferner Folgendes umfasst:
eine Beurteilungseinheit (74), die ausgelegt ist zum: nachdem die Beurteilungseinheit die Rückgängigmachenanzeigenachricht empfangen hat, Beurteilen, ob die Zubringerschlitzeinstellung der Datenebene erfolgreich ist; und
eine Rückgängigmacheneinheit (75), die ausgelegt ist zum: in einem Falle, dass die Beurteilungseinheit beurteilt, dass die Zubringerschlitzeinstellung erfolgreich ist, Ausführen einer Zubringerschlitzeinstellungs-Rückgängigmachenoperation und Zurückgehen zu einem Zustand vor der Zubringerschlitzeinstellung.

11. Knotenvorrichtung auf einem ODUflex-Pfad, die Folgendes umfasst:
eine zweite Empfangseinheit (99), die ausgelegt ist zum Empfangen einer durch einen Upstream-Knoten gesendeten Anforderungsnachricht, wobei die Anforderungsnachricht eine Tunnelkennung, Tunnel-ID, des ODUflex-Pfads, eine neue Kennzeichnungsumschaltpfadkennung bzw. Label-Switching-Pfad-Kennung, LSP ID, Bandbreiteninformationen nach Einstellung und eine Kennzeichnung, die Zubringerschlitzeinstellungsinformationen, die von dem Upstream-Knoten bestimmt wurden, führt, wobei die Anforderungsnachricht verwendet wird zum Anfordern verlustloser Einstellung einer Bandbreite des ODUflex-Pfads und die Zubringerschlitzeinstellungsinformationen einen Zubringerschlitz nach Einstellung oder einen Zubringerschlitz, der eingestellt werden soll und von dem Upstream-Knoten ausgewählt wurde, umfasst;
eine Sicherungseinheit (95), die ausgelegt ist zum Sichern von Steuerinformationen, wobei die Steuerinformationen die Tunnel-ID, die neue LSP ID, die Bandbreiteninformationen nach Einstellung und die Kennzeichnung, die die von dem Upstream-Knoten bestimmten Zubringerschlitzeinstellungsinformationen enthält, umfassen;
eine Zubringerschlitzzuweisungseinheit (90), die ausgelegt ist zum: in einem Fall, dass ein aktueller Knoten kein letzter Knoten des ODUflex-Pfads ist, Vergleichen der Bandbreiteninformationen nach der Einstellung des ODUflex-Pfads mit den Bandbreiteninformationen vor der Einstellung, Bestimmen der Anzahl von Zubringerschlitzen, die für einen Link zwischen dem Downstream-Knoten und einem angrenzenden nächsten Knoten eingestellt werden müssen, und Bestimmen von Zubringerschlitzeinstellungsinformationen gemäß der Anzahl von Zubringerschlitzen, die eingestellt werden sollen, wobei die Zubringerschlitzeinstellungsinformationen Folgendes umfassen: einen Zubringerschlitz nach der Einstellung oder einen ausgewählten Zubringerschlitz, der eingestellt werden soll;
eine Sendeinheit (91), die ausgelegt ist zum Senden einer Anforderungsnachricht an einen Downstream-Knoten, wobei die Anforderungsnachricht die Tunnel-ID des ODUflex-Pfads, die neue LSP ID, die Bandbreiteninformationen nach Einstellung und eine Kennzeichnung, die die von dem aktuellen Knoten bestimmten Zubringerschlitzeinstellungsinformationen trägt, wobei die Anforderungsnachricht verwendet wird zum Anfordern von verlustloser Einstellung einer Bandbreite des ODUflex-Pfads; und
eine Anzeigeeinheit (92), die ausgelegt ist zum Senden eines ersten Zubringerschlitzeinstellbefehls an eine Datenebene gemäß den durch den aktuellen Knoten bestimmten Zubringerschlitzeinstellungsinformationen, so dass die Datenebene einen Zubringerschlitz einer Linkverbindung zwischen dem aktuellen Knoten und dem angrenzenden nächsten Knoten gemäß dem ersten Zubringerschlitzeinstellbefehl einstellt, ferner ausgelegt ist zum Senden eines zweiten Zubringerschlitzeinstellbefehls an die Datenebene gemäß den Zubringerschlitzeinstellungsinformationen in der durch die zweite Empfangseinheit empfangenen Anforderungsnachricht, so dass die Datenebene einen Zubringerschlitz einer Linkverbindung zwischen dem Upstream-Knoten und dem aktuellen Knoten gemäß dem zweiten Zubringerschlitzeinstellbefehl einstellt.

12. Knotenvorrichtung nach Anspruch 11, wobei, wenn die Knotenvorrichtung ein erster Knoten des ODUflex-Pfads ist, die Knotenvorrichtung ferner Folgendes umfasst:
eine Pfadkennungszuweisungseinheit (93), die ausgelegt ist zum Zuweisen einer neuen Kennzeichnungsumschaltpfadkennung bzw. Label-Switching-Pfad-Kennung, LSP ID, zum ODUflex-Pfad nach der Einstellung und Führen der neuen LSP ID in der an den Downstream-Knoten gesendeten Anforderungsnachricht.

13. Knotenvorrichtung nach Anspruch 12, die ferner Folgendes umfasst:
eine Rückgängigmachenauslöseeinheit (94), die ausgelegt ist zum Senden einer Rückgängigmachenanzeigenachricht an den Downstream-Knoten, nachdem eine von der Datenebene gesendete Zubringerschlitzeinstellungsfehlschlaganzeige oder ODUflex-Bitrateneinstellungsfehlschlaganzeige empfangen wurde.

14. Knotenvorrichtung nach Anspruch 11, die ferner Folgendes umfasst:
eine erste Empfangseinheit (96), die ausgelegt ist zum Empfangen einer Rückgängigmachenanzeigenachricht, die Knoten für Knoten downstream entlang dem ODUflex-Pfad durch einen ersten Knoten des ODUflex-Pfads gesendet wird, eine Beurteilungseinheit (97), die ausgelegt ist zum: nachdem die Empfangseinheit die Rückgängigmachenanzeigenachricht empfangen hat, Beurteilen, ob die Zubringerschlitzeinstellung der Datenebene erfolgreich ist; und
eine Rückgängigmacheneinheit (98), die ausgelegt ist zum: in einem Falle, dass die Beurteilungseinheit beurteilt, dass die Zubringerschlitzeinstellung erfolgreich ist, Ausführen einer Zubringerschlitzeinstellungs-Rückgängigmachenoperation und Zurückgehen zu einem Zustand vor der Zubringerschlitzeinstellung.

15. Knotenvorrichtung nach Anspruch 11, die ferner Folgendes umfasst:
eine zweite Empfangseinheit (99), die ausgelegt ist zum: in einem Fall, dass der aktuelle Knoten kein erster Knoten ist, Empfangen einer von einem Upstream-Knoten des aktuellen Knotens gesendeten Anforderungsnachricht, wobei die Anforderungsnachricht die Tunnelkennung, Tunnel-ID, des ODUflex-Pfads, die Bandbreiteninformationen nach Einstellung und eine Kennzeichnung führt, die von dem Upstream-Knoten bestimmte Zubringerschlitzeinstellungsinformationen enthält, und die Anforderungsnachricht verwendet wird zum Anfordern der verlustlosen Einstellung der Bandbreite des ODUflex-Pfads; und
die Anzeigeeinheit (92), die ferner ausgelegt ist zum Senden eines zweiten Zubringerschlitzeinstellbefehls an die Datenebene gemäß den Zubringerschlitzeinstellungsinformationen in der durch die zweite Empfangseinheit empfangenen Anforderungsnachricht, so dass die Datenebene einen Zubringerschlitz einer Linkverbindung zwischen dem Upstream-Knoten und dem aktuellen Knoten gemäß dem zweiten Zubringerschlitzeinstellbefehl einstellt.

## Revendications

1. Procédé d'ajustement de bande passante sans perte pour un Réseau de Transport Optique, comprenant :
la réception (10), par un noeud aval d'un trajet d'unités de données de canal optique à bande passante variable ODUflex, d'un message de demande provenant d'un noeud amont du trajet ODUflex, le message de demande transportant un identifiant de tunnel, ID de tunnel, du trajet ODUflex, des informations de bande passante après ajustement et un nouvel identifiant de trajet à commutation par étiquette, ID LSP, le message de demande étant utilisé pour demander un ajustement sans perte d'une bande passante du trajet ODUflex, et le message de demande étant envoyé par un premier noeud du trajet ODUflex, le long du trajet ODUflex, vers l'aval, de noeud en noeud, jusqu'à un dernier noeud;
la sauvegarde, par le noeud aval, d'informations de commande d'un LSP après ajustement, les informations de commande comprenant l'ID de tunnel, les informations de bande passante après ajustement et le nouvel ID LSP ;
la recherche (11), par le noeud aval, en fonction de l'identifiant de tunnel, pour obtenir des informations de bande passante avant ajustement du trajet ODUflex, la comparaison des informations de bande passante avant l'ajustement aux informations de bande passante après ajustement, la détermination du nombre de créneaux affluents qui ont besoin d'être ajustés pour une liaison entre le noeud aval et un noeud amont adjacent, et la sélection d'un créneau affluent qui a besoin d'être ajusté ; et
l'indication (12), par le noeud aval et par l'intermédiaire d'une étiquette, d'un créneau affluent après ajustement du noeud amont adjacent ou du créneau affluent sélectionné qui a besoin d'être ajusté, et l'envoi d'une commande d'ajustement de créneau affluent à un plan de données, de telle sorte que le plan de données exécute un ajustement de créneau affluent et un ajustement de débit ODUflex en fonction de la commande d'ajustement de créneau affluent.

2. Procédé selon la revendication 1, dans lequel l'indication, par le noeud aval et par l'intermédiaire de l'étiquette, du créneau affluent après ajustement du noeud amont adjacent ou du créneau affluent sélectionné qui a besoin d'être ajusté, comprend :
l'envoi, au noeud amont, d'un message de réponse, qui transporte une ancienne étiquette et une nouvelle étiquette, la nouvelle étiquette contenant un créneau affluent qui est occupé par le trajet ODUflex après ajustement sur une liaison entre le noeud amont et le noeud aval, et l'ancienne étiquette contenant un créneau affluent qui est occupé par le trajet ODUflex avant ajustement sur la liaison entre le noeud amont et le noeud aval ; ou
l'envoi, au noeud amont, d'un message de réponse, qui transporte une nouvelle étiquette, la nouvelle étiquette contenant un créneau affluent qui est occupé par le trajet ODUflex après ajustement sur une liaison entre le noeud amont et le noeud aval ; ou
l'envoi d'un message de réponse vers l'amont, qui transporte une nouvelle étiquette, la nouvelle étiquette contenant le créneau affluent sélectionné qui a besoin d'être ajusté, et indiquant si cet ajustement de créneau affluent est une augmentation du nombre de créneaux affluents ou une diminution du nombre de créneaux affluents.

3. Procédé selon la revendication 2, dans lequel
si le message de réponse, qui transporte l'ancienne étiquette et la nouvelle étiquette, est envoyé au noeud aval, la nouvelle étiquette contenant le créneau affluent qui est occupé par le trajet ODUflex après ajustement sur la liaison entre le noeud amont et le noeud aval, et l'ancienne étiquette contenant un créneau affluent qui est occupé par le trajet ODUflex avant ajustement sur la liaison entre le noeud amont et le noeud aval, le procédé comprend en outre : la comparaison, par le noeud amont, de la nouvelle étiquette à l'ancienne étiquette pour connaître le créneau affluent qui a besoin d'être ajusté ; ou
si le noeud aval envoie, au noeud amont, le message de réponse, qui transporte la nouvelle étiquette, la nouvelle étiquette contenant le créneau affluent qui est occupé par le trajet ODUflex après ajustement sur la liaison entre le noeud amont et le noeud aval, le procédé comprend en outre : la recherche par le noeud amont, en fonction de l'identifiant de tunnel, dans le message de demande, pour obtenir une ancienne étiquette du trajet ODUflex, l'ancienne étiquette contenant un créneau affluent qui est occupé par le trajet ODUflex avant ajustement sur la liaison entre le noeud amont et le noeud aval ; et la comparaison de la nouvelle étiquette à l'ancienne étiquette pour connaître le créneau affluent qui a besoin d'être ajusté.

4. Procédé selon la revendication 1, dans lequel l'envoi de la commande d'ajustement de créneau affluent au plan de données, de telle sorte que le plan de données exécute l'ajustement de créneau affluent et l'ajustement de débit ODUflex en fonction de la commande d'ajustement de créneau affluent, comprend :
si la commande d'ajustement de créneau affluent est une commande d'augmentation de créneaux affluents, l'exécution, par le plan de données, de l'ajustement de débit ODUflex après achèvement de l'ajustement de créneau affluent de toutes les connexions de liaison sur le trajet ODUflex ; et
si la commande d'ajustement de créneau affluent est une commande de diminution de créneaux affluents, l'exécution, par le plan de données, de l'ajustement de créneau affluent d'une connexion de liaison sur le trajet ODUflex après achèvement de l'ajustement de débit ODUflex.

5. Procédé selon la revendication 1, dans lequel, si une indication d'échec d'ajustement de créneau affluent ou une indication d'échec d'ajustement de débit ODUflex envoyée par le plan de données est reçue, le procédé comprend en outre :
l'envoi, par le premier noeud du chemin ODUflex, d'un message d'indication de retour arrière le long du chemin ODUflex, vers l'aval, de noeud en noeud; et
après réception du message d'indication de retour arrière, l'estimation préalable, par chaque noeud du trajet ODUflex, du fait que l'ajustement de créneau affluent du plan de données est ou non réussi, et s'il est réussi, l'exécution d'une opération de retour arrière d'ajustement de créneau affluent, et le retour arrière à un état avant l'ajustement de créneau affluent.

6. Procédé d'ajustement de bande passante sans perte pour un Réseau de Transport Optique, comprenant :
la réception (40), par un noeud aval d'un trajet d'unités de données de canal optique à bande passante variable ODUflex, d'un message de demande provenant d'un noeud amont, le message de demande transportant un identifiant de tunnel, ID de tunnel, du trajet ODUflex, un nouvel identifiant de trajet à commutation par étiquette, ID LSP,
des informations de bande passante après ajustement et une étiquette qui contient des informations d'ajustement de créneau affluent déterminées par le noeud amont, le message de demande étant utilisé pour demander un ajustement sans perte d'une bande passante du trajet ODUflex, et les informations d'ajustement de créneau affluent comprenant un créneau affluent après ajustement ou un créneau affluent qui a besoin d'être ajusté et qui est sélectionné par le noeud amont ;
la sauvegarde, par le noeud aval, d'informations de commande d'un LSP après ajustement, les informations de commande du LSP comprenant l'ID de tunnel, le nouvel ID LSP, les informations de bande passante après ajustement et l'étiquette qui contient des informations d'ajustement de créneau affluent déterminées par le noeud amont ;
l'envoi (41), par le noeud aval, d'une première commande d'ajustement de créneau affluent à un plan de données en fonction des informations d'ajustement de créneau affluent et, dans un cas où le noeud courant n'est pas un dernier noeud du trajet ODUflex, la recherche en fonction de l'identifiant de tunnel pour obtenir des informations de bande passante avant ajustement du trajet ODUflex, la comparaison des informations de bande passante après ajustement aux informations de bande passante avant ajustement, la détermination du nombre de créneaux affluents qui ont besoin d'être ajustés pour une liaison entre le noeud aval et un noeud suivant adjacent à ce noeud aval, la détermination d'informations d'ajustement de créneau affluent en fonction du nombre de créneaux affluents qui ont besoin d'être ajustés, et la continuation de l'envoi, au noeud suivant, d'un message de demande qui transporte l'ID de tunnel du trajet ODUflex, le nouvel ID LSP, les informations de bande passante après ajustement et une étiquette qui contient les informations d'ajustement de créneau affluent déterminées par le noeud aval ;
l'envoi (42), par le noeud aval, d'une deuxième commande d'ajustement de créneau affluent au plan de données ; et
l'exécution, par le plan de données, d'un ajustement de créneau affluent et d'un ajustement de débit ODUflex en fonction de la première commande d'ajustement de créneau affluent et de la deuxième commande d'ajustement de créneau affluent, le plan de données ajustant un créneau affluent sur une connexion de liaison entre le noeud amont et le noeud aval en fonction de la première commande d'ajustement de créneau affluent, et ajustant un créneau affluent d'une connexion de liaison entre le noeud aval et le noeud suivant adjacent en fonction de la deuxième commande d'ajustement de créneau affluent.

7. Procédé selon la revendication 6, dans lequel l'exécution, par le plan de données, de l'ajustement de créneau affluent et de l'ajustement de débit ODUflex en fonction de la première commande d'ajustement de créneau affluent et de la deuxième commande d'ajustement de créneau affluent, comprend :
si la première commande d'ajustement de créneau affluent et la deuxième commande d'ajustement de créneau affluent sont des commandes d'augmentation de créneaux affluents, l'exécution, par le plan de données, de l'ajustement de débit ODUflex après achèvement de l'ajustement de créneau affluent de toutes les connexions de liaison sur le trajet ODUflex ; et
si la première commande d'ajustement de créneau affluent et la deuxième commande d'ajustement de créneau affluent sont des commandes de diminution de créneaux affluents, l'exécution, par le plan de données, d'un ajustement de créneau affluent d'une connexion de liaison sur le trajet ODUflex après achèvement de l'ajustement de débit ODUflex.

8. Dispositif formant noeud sur un trajet ODUflex, comprenant :
une unité de réception (70), configurée pour recevoir un message de demande d'un noeud amont du trajet ODUflex, le message de demande transportant un identifiant de tunnel, ID de tunnel, du trajet ODUflex, des informations de bande passante après ajustement et un nouvel identifiant de trajet à commutation par étiquette, ID LSP, et le message de demande étant utilisé pour demander un ajustement sans perte d'une bande passante du trajet ODUflex ;
une unité de sauvegarde (73), configurée pour sauvegarder des informations de commande d'un LSP après ajustement, les informations de commande comprenant l'ID de tunnel, les informations de bande passante après ajustement et le nouvel ID LSP;
une unité d'allocation de créneau affluent (71), configurée pour rechercher, en fonction de l'identifiant de tunnel, pour obtenir des informations de bande passante avant ajustement du trajet ODUflex, comparer les informations de bande passante avant ajustement aux informations de bande passante après ajustement, déterminer le nombre de créneaux affluents qui ont besoin d'être ajustés pour une liaison entre le dispositif formant noeud et un noeud amont adjacent, et sélectionner un créneau adjacent qui a besoin d'être ajusté ; et
une unité d'indication (72), configurée pour indiquer, par l'intermédiaire d'une étiquette, un créneau affluent après ajustement du noeud amont adjacent ou du créneau affluent sélectionné qui a besoin d'être ajusté, et envoyer une commande d'ajustement de créneau affluent à un plan de données, de telle sorte que le plan de données exécute un ajustement de créneau affluent et un ajustement de débit ODUflex en fonction de la commande d'ajustement de créneau affluent.

9. Dispositif formant noeud selon la revendication 8, dans lequel le message de demande reçu par l'unité de réception contient un nouvel identifiant de trajet à commutation par étiquette, ID LSP, alloué par un premier noeud du trajet ODUflex au trajet ODUflex après ajustement.

10. Dispositif formant noeud selon la revendication 8, dans lequel l'unité de réception est en outre configurée pour recevoir un message d'indication de retour arrière qui est envoyé par le premier noeud du trajet ODUflex le long du trajet ODUflex, vers l'aval, de noeud en noeud, et le dispositif formant noeud comprend en outre :
une unité d'estimation (74), configurée pour : après que l'unité de réception a reçu le message d'indication de retour arrière, estimer si l'ajustement de créneau affluent du plan de données est ou non réussi ; et
une unité de retour arrière (75), configurée pour : dans un cas où l'unité d'estimation estime que l'ajustement de créneau affluent est réussi, exécuter une opération de retour arrière d'ajustement de créneau affluent, et revenir en arrière à un état avant l'ajustement de créneau affluent.

11. Dispositif formant noeud sur un trajet ODUflex, comprenant :
une deuxième unité de réception (99), configurée pour recevoir un message de demande envoyé par un noeud amont, le message de demande transportant un identifiant de tunnel, ID de tunnel, du trajet ODUflex, un nouvel identifiant de trajet à commutation par étiquette, ID LSP, des informations de bande passante après ajustement et une étiquette qui contient des informations d'ajustement de créneau affluent déterminées par le noeud amont, le message de demande étant utilisé pour demander un ajustement sans perte d'une bande passante du trajet ODUflex, et les informations d'ajustement de créneau affluent comprenant un créneau affluent après ajustement ou un créneau affluent qui a besoin d'être ajusté et qui est sélectionné par le noeud amont ;
une unité de sauvegarde (95), configurée pour sauvegarder des informations de commande, les informations de commandes comprenant l'ID de tunnel, le nouvel ID LSP, les informations de bande passante après ajustement et l'étiquette qui contient des informations d'ajustement de créneau affluent déterminées par le noeud amont ;
une unité d'allocation de créneau affluent (90), configurée pour : dans un cas où un noeud courant n'est pas un dernier noeud du trajet ODUflex, comparer des informations de bande passante après ajustement du trajet ODUflex à des informations de bande passante avant ajustement, déterminer le nombre de créneaux affluents qui ont besoin d'être ajustés pour une liaison entre le noeud courant et un noeud suivant adjacent, et déterminer des informations d'ajustement de créneau affluent en fonction du nombre de créneaux affluents qui ont besoin d'être ajustés, les informations d'ajustement de créneau affluent comprenant : un créneau affluent après ajustement ou un créneau affluent sélectionné qui a besoin d'être ajusté ;
une unité d'envoi (91), configurée pour envoyer un message de demande à un noeud aval, le message de demande transportant l'ID de tunnel du trajet ODUflex, le nouvel ID LSP, les informations de bande passante après ajustement et une étiquette qui contient les informations d'ajustement de créneau affluent déterminées par le noeud courant, le message de demande étant utilisé pour demander un ajustement sans perte d'une bande passante du trajet ODUflex ; et
une unité d'indication (92), configurée pour envoyer une première commande d'ajustement de créneau affluent à un plan de données en fonction des informations d'ajustement de créneau affluent déterminées par le noeud courant, de telle sorte que le plan de données ajuste un créneau affluent d'une connexion de liaison entre le noeud courant et le noeud suivant adjacent en fonction de la première commande d'ajustement de créneau affluent, configurée en outre pour envoyer une deuxième commande d'ajustement de créneau affluent au plan de données en fonction des informations d'ajustement de créneau affluent dans le message de demande reçu par la deuxième unité de réception, de telle sorte que le plan de données ajuste un créneau affluent d'une connexion de liaison entre le noeud amont et le noeud courant en fonction de la deuxième commande d'ajustement de créneau affluent.

12. Dispositif formant noeud selon la revendication 11, dans lequel, lorsque le dispositif formant noeud est un premier noeud du trajet ODUflex, le dispositif formant noeud comprend en outre :
une unité d'allocation d'identifiant de trajet (93), configurée pour allouer un nouvel identifiant de trajet à commutation par étiquette, ID LSP, au trajet ODUflex après ajustement, et transporter le nouvel ID LSP dans le message de demande envoyé au noeud aval.

13. Dispositif formant noeud selon la revendication 12, comprenant en outre :
une unité de déclenchement de retour arrière (94), configurée pour envoyer un message d'indication de retour arrière au noeud aval après la réception d'une indication d'échec d'ajustement de créneau affluent ou d'une indication d'échec d'ajustement de débit ODUflex envoyée par le plan de données.

14. Dispositif formant noeud selon la revendication 11, comprenant en outre :
une première unité de réception (96), configurée pour recevoir un message d'indication de retour arrière qui est envoyé par un premier noeud du trajet ODUflex le long du trajet ODUflex, vers l'aval, de noeud en noeud;
une unité d'estimation (97), configurée pour : après que l'unité de réception a reçu le message d'indication de retour arrière, estimer si l'ajustement de créneau affluent du plan de données est ou non réussi ; et
une unité de retour arrière (98) configurée pour : dans un cas où l'unité d'estimation estime que l'ajustement de créneau affluent est réussi, exécuter une opération de retour arrière d'ajustement de créneau affluent, et revenir en arrière à un état avant l'ajustement de créneau affluent.

15. Dispositif formant noeud selon la revendication 11, comprenant en outre :
une deuxième unité de réception (99), configurée pour : dans un cas où le noeud courant n'est pas un premier noeud, recevoir un message de demande envoyé par un noeud amont du noeud courant, le message de demande transportant l'identifiant de tunnel, ID de tunnel, du trajet ODUflex, les informations de bande passante après ajustement et une étiquette qui contient des informations d'ajustement de créneau affluent déterminées par le noeud amont, et le message de demande étant utilisé pour demander l'ajustement sans perte de la bande passante du trajet ODUflex ; et
l'unité d'indication (92), configurée en outre pour envoyer une deuxième commande d'ajustement de créneau affluent au plan de données en fonction des informations d'ajustement de créneau affluent dans le message de demande reçu par la deuxième unité de réception, de telle sorte que le plan de données ajuste un créneau affluent d'une connexion de liaison entre le noeud amont et le noeud courant en fonction de la deuxième commande d'ajustement de créneau affluent.
